(19)

**Europäisches Patentamt**
**European Patent Office**
**Office européen des brevets**

(11)  **EP 4 193 837 A1**

(12)  # EUROPEAN PATENT APPLICATION

(43) Date of publication:
**14.06.2023 Bulletin 2023/24**

(21) Application number: **22213192.2**

(22) Date of filing: **13.12.2022**

(51) International Patent Classification (IPC):
*A21D 4/00* (2006.01)     *A21D 8/04* (2006.01)
*A21D 10/00* (2006.01)     *A21D 10/04* (2006.01)
*A21D 13/00* (2017.01)     *A23L 7/104* (2016.01)
*A23L 29/00* (2016.01)

(52) Cooperative Patent Classification (CPC):
**A21D 8/047; A21D 8/045; A21D 10/005;
A23L 7/104**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021 EP 21214102**

(71) Applicant: **Koninklijke Zeelandia Groep B.V.
4301 AA Zierikzee (NL)**

(72) Inventors:
• **KARAS, Jan**
  **391 75 Mal ice (CZ)**
• **BUCHTA, Marek**
  **391 75 Mal ice (CZ)**
• **HAVELKOVÁ, Dita**
  **391 75 Mal ice (CZ)**

(74) Representative: **Patentwerk B.V.
P.O. Box 1514
5200 BN 's-Hertogenbosch (NL)**

(54)  **STABLE ACTIVE SOURDOUGH COMPOSITION USES THEREOF AND METHOD FOR ITS PRODUCTION**

(57)  The invention relates to a process for preparing an active sourdough composition comprising: (0) optionally a dough acidification stage, wherein acidified dough is prepared in a subprocess, (I) an aerobic fermentation stage, (II) an anaerobic fermentation stage, (III) a water activity reduction stage, and (IV) optionally a mechanization stage. The invention also relates to an active sourdough composition obtainable with such a process and to a kit of parts comprising such a product and an information carrier containing information about the storage of the product. Furthermore the invention relates to a method for preparing a bakery product comprising mixing, preferably by kneading, an amount of the active sourdough composition to dough ingredients and to the use of the active sourdough composition for preparing a bakery product.

EP 4 193 837 A1

**Description**

**Field of the Invention**

The present invention relates to the field of bakery products. More particularly the invention relates to the field of active sourdough compositions. Such active sourdough compositions can for example be used directly for the preparation of sourdough breads, as mother dough inoculant to inoculate dough ingredients (or a prepared dough) to create a larger volume of a sourdough in a back-slopping process or in the production of pastry or of viennoiserie.

**Background Art**

Sourdough (leaven) is a food ingredient obtained from flour of cereals or pseudo-cereals, fermented by microorganisms, mainly lactic acid bacteria and yeast, and used mainly in bakery and baked pastry products. Lactic acid bacteria fermentation generates organic acids, in particular lactic acid and/or acetic acid, that give the acidity to the sourdough. Flour, water, microbiota and fermentation parameters lead to the great diversity in the characteristics of sourdoughs, and consequently, to typical and distinct organoleptic properties in bread and pastry production.

There are three common ways to produce sourdoughs. First, by spontaneous fermentation. In this process the sourdough is produced by fermentation of cereals or pseudo-cereals with microorganisms naturally present in the environment and/or raw material. Second, controlled fermentation from a starter, wherein the sourdough is produced by fermentation of cereals or pseudo-cereals with specifically selected lactic acid bacteria and/or yeast. These so-called starter cultures or sourdough starters can be prepared from many different species of lactobacilli or yeast, or their combinations. This way the sourdough can be fermented in a controlled environment. Third, by back-slopping. In this process, an existing living (active) sourdough or a mother dough is used to initiate a new sourdough production. The existing living sourdough or the mother dough is mixed with flour and water, and this way it is cyclically refreshed on an adequate timescale and using specific recipes and ripening conditions. Other ingredients, like salt, fat, fruit and/or vegetable extracts, enzymes and similar further additions, may be a part of the sourdough-making process, depending on local habits and traditions.

Historically, in view of its typical acidic characteristic, sourdough has been used in rye bread production to fight gluten deficiency. In addition to the production of breads, sourdough has other very useful applications in the manufacture of other baked goods. For example, the addition of sourdough can improve the laminating properties of pastry for the production of viennoiserie. It can also improve the texture and enhance the flavour of enriched breads such as brioche and panettone. Sourdough can also be used to prolong the mould-free shelf life of some products due to its inherent acidity.

From a production point of view, the active sourdough preparation is usually a time-consuming process that involves several pre-fermentation and fermentation stages, during which the microbiology of sourdough must be carefully controlled and balanced, if the target acidity and flavour profile should be achieved. The process often represents a problem for the bakers. First, it takes 12 to 72 hours which makes the sourdough preparation labour-intensive. Second, in bakery, it is hard to produce a sourdough of constant quality, that is with stable composition of microflora and/or desired acidity range and/or a required flavour profile. Third, the baker must consider the space required for fermentation of the active sourdough, and the necessary critical controls to ensure that it remains viable, stable and uncontaminated. Fourth, the prepared active sourdough, pre-dough, or mother dough has very short usage window (usually hours) before it loses its activity or deteriorates, if not chilled.

Making water less available for microorganisms to multiply (dehydration) helps preserving the active chilled sourdough for longer time, up to 2-3 months. Traditionally, the bakers take about ½ to ¼ part of the liquid sourdough and about ½ to ¾ part of flour (preferably 1/3 of the liquid sourdough and 2/3 of flour) and process it into a crumble. The crumble can be further compressed into a solid block if needed. Such a low-Aw active sourdough can be restarted by adding flour and water. Despite this, such a low-Aw existing active sourdough must be kept at cooled conditions with a recommended temperature range of about 1-4°C.

In order to make the use of sourdough easier for bakers, bakery product suppliers have developed different sourdough ingredients. For use as a bakery ingredient, currently there are two forms of sourdough on the market i.e., living active sourdough and inactive sourdough. Living active sourdough, is an ingredient in which the microbial culture is alive or active for leavening purposes. The active sourdough can also be used to initiate back-slopping/refreshing. The active sourdoughs are usually liquid, paste, crumbled, or compressed in cuttable blocks (see for example WO2020/249917). Because of the living microflora they must be kept under cooled conditions, preferably at temperatures between 1 - 4°C to remain stable, storable, and transportable. The shelf life of current active sourdough products varies from hours to days to some months (usually 1-3 months) in cooled storage. Inactive sourdough is an ingredient in which the microbial culture is no longer significantly alive or active for leavening purposes. The inactive sourdoughs are provided in liquid, paste, crumbled, compressed, and powdered (dried) formats.

Because cooled storage and transport in most circumstances require special measures and additional investments, there is a need for an active sourdough with an improved shelf-life under a broader temperature range.

The present inventors have found that it is possible to obtain a living (active) sourdough, with good stability at ambient temperature. Such a ready-to-use sourdough can be used for direct bread and pastry production methods, or as a starter for mother doughs and other pre-dough stages.

## Summary of the Invention

The present invention according to a first aspect relates to a process for preparing an active sourdough composition. The process comprises:

(0) optionally a dough acidification stage, wherein acidified dough is prepared in a subprocess comprising:

- providing flour;
- providing water;
- providing an acid source, preferably an organic acid source, such as an organic acid composition or a microbial inoculum, the dough acidification inoculum, comprising a number of lactic acid bacteria species, preferably selected from the genus *Lactobacillus,* such as selected from *Lactobacillus acidophilus, Lactobacillus farciminis, Lactobacillus delbrueckii, Lactobacillus casei, Lactobacillus plantarum, Lactobacillus rhamnosus, Lactobacillus brevis, Lactobacillus sanfransicencis, Lactobacillus pontis, Lactobacillus helveticus, Lactobacillus amylophilus, Lactobacillus amylolyticus* or *Lactobacillus fermentum*;
- mixing, preferably by kneading, the flour, water and the acid source, and when the acid source is a microbial inoculum fermenting the mixture, such as to form an acidified dough having a total titratable acidity (TTA) of between 10°- 90° TTA, preferably 20°-50° TTA, most preferably 25°-40° TTA;
- optionally drying the acidified dough to obtain a dried acidified dough preferably having a dry matter content of 90-98%, more preferably 92-97%;

- (I) an aerobic fermentation stage comprising:

  - providing at least one of flour and acidified dough, preferably fermented acidified dough, such as dried fermented acidified dough;
  - optionally providing water;
  - providing a microbial inoculum, the primary yeast inoculum, comprising a number of yeast species, preferably selected from the genus *Saccharomyces,* such as *Saccharomyces cerevisiae, Saccharomyces carlsbergensis,* from the genus *Kluyveromyces,* such as *Kluyveromyces marxianus lactis,* from the genus *Candida,* such as *Candida milleri, or Candida humilis,* from the genus *Naumavozyma,* such as *Naumavozyma castelii,* from the genus *Kazachstania,* such as *Kazachstania barnettii*;
  - mixing at least one of flour and acidified dough, preferably fermented acidified dough, such as dried fermented acidified dough with the primary yeast inoculum and optionally water and allowing the mixture to ferment under aerobic conditions to form a dough, the aerobic yeast ferment;

- (II) an anaerobic fermentation stage comprising:

  - providing aerobic yeast ferment from the aerobic fermentation stage;
  - providing at least one of flour and acidified dough, preferably fermented acidified dough, such as dried fermented acidified dough;
  - optionally providing water;
  - providing a microbial inoculum, the anaerobic stage inoculum, comprising a number of lactic acid bacteria species, preferably comprising one or more selected from the genus *Lactobacillus,* such as selected from *Lactobacillus acidophilus, Lactobacillus farciminis, Lactobacillus delbrueckii, Lactobacillus casei, Lactobacillus plantarum, Lactobacillus rhamnosus, Lactobacillus brevis, Lactobacillus sanfransicencis, Lactobacillus pontis, Lactobacillus helveticus, Lactobacillus amylophilus, Lactobacillus amylolyticus* or *Lactobacillus fermentum*;
  - mixing aerobic yeast ferment with at least one of flour and acidified dough, preferably fermented acidified dough, such as dried fermented acidified dough and optionally water and allowing the mixture to ferment under anaerobic conditions to form a dough, the anaerobic ferment;

- (III) a water activity reduction stage comprising:

  - providing anaerobic ferment from the anaerobic fermentation stage;

- providing at least one of flour and acidified dough, preferably fermented acidified dough, such as dried fermented acidified dough;
- providing a microbial inoculum, the secondary yeast inoculum, comprising a number of yeast species, preferably selected from the genus *Saccharomyces,* such as *Saccharomyces cerevisiae, Saccharomyces carlsbergensis,* from the genus *Kluyveromyces,* such as *Kluyveromyces marxianus lactis,* from the genus *Candida,* such as *Candida milleri, or Candida humilis,* from the genus *Naumavozyma,* such as *Naumavozyma castelii,* from the genus *Kazachstania,* such as *Kazachstania barnettii;*
- mixing anaerobic ferment, secondary yeast inoculum and at least one of flour and acidified dough, preferably fermented acidified dough, such as dried fermented acidified dough, to a residual moisture content of 15-30%, preferably 18-25% and allowing the mixture to ferment under aerobic conditions to form an active sourdough composition;

- (IV) optionally a mechanization stage comprising one or more of:

    - mechanically homogenizing the active sourdough composition to a crumble form active sourdough;
    - compressing active sourdough composition and/or crumble active sourdough into a number of solid form bodies, preferably cuttable bodies, most preferably cuttable blocks;
    - packaging the active sourdough starter composition.

A further aspect of the invention relates to an active sourdough composition obtainable with the process of the invention. The active sourdough composition thus obtainable is characterized in that it has a shelf-life of up to at least 15 days, preferably up to at least 30, 45, 60, 75, 90, 105 or up to a least 120days, when packaged in a closed container.

Yet a further aspect of the invention relates to a product comprising a closed container said container comprising an amount of an active sourdough composition of the invention.

According to a further aspect, the invention also relates to a method for preparing a bakery product, the method comprising adding an amount of a sourdough composition according to the invention to a dough to form an inoculated dough and proofing and/or raising the inoculated dough, to form a ready to bake inoculated dough.

### Detailed description of the invention

The process for preparing the active sourdough composition according to the invention is a multistage process. The different stages of this process will be discussed in detail below. As the skilled person will understand, the order of the different stages of the process may differ in practice relative to the order in which they are discussed below. In addition, as indicated, certain stages are merely optional and not mandatory when applying the process.

The process of the invention may comprise a dough acidification stage (stage (0)) for preparing an acidified dough, referred to as the "acidified dough". The acidified dough is prepared by mixing, preferably by kneading, flour, water and an acid source, such as to form an acidified dough having an increased total titratable acidity (TTA).

The flour provided may be any (plain) flour suitable for sourdough preparation, such as wheat, spelt, rye or barley flour. Preferably the flour is a mineral rich flour, such as wholegrain flour. The use of wholegrain flour is not only beneficial in terms of organoleptic properties and the nutritional requirements of the human consumer, but also for the provision of required nutrients (including minerals) for the microbial cultures involved in the fermentation.

Water provided in any step of the process of the invention may be any water suitable for use in food production, in particular the production of bakery products. In many countries, tap water of sufficient quality will be suitable. The water may also, at least partially, be provided in the form of other food grade aqueous products, such as dairy products, including milk, plant juices, such as fruit juices, vegetable infusions, vegetable extracts, beer, wine.

The acid source may provide any acid that is suitable to lower the TTA of the flour with water mixture. Preferably the acid source is an organic acid source capable of providing a number of C2, C3 or C4 organic acids, more preferably a number of C2 or C3 organic acids, such as selected from acetic acid and/or lactic acid, and mixtures thereof. The organic acid source may be an organic acid composition or a microbial inoculum comprising a number of lactic acid bacteria species. The skilled person will understand that lactic acid bacteria during fermentation, such as fermentation on flour, are capable of producing organic acids and that as such a microbial inoculum containing a number of lactic acid bacteria can be an acid source. Organic acid compositions, such as from lactic acid and acetic acid or from other C2, C3 or C4 organic acids, are readily available. Acid sources used should be food grade.

When a microbial inoculum is used in the dough acidification stage it comprises a number of lactic acid bacteria species. The microbial inoculum may be referred to as the dough acidification inoculum. Within this description of the invention the term "a number of" every time when used should be understood to mean one or more, and includes a plurality, such as 2, 3, 4, 5, 6, 7, 8, 9, 10, 11, 12. The plurality may be an even or an uneven plurality.

The lactic acid bacteria selected for the dough acidification inoculum should be suitable for use in bakery products. As such they should be food grade and/or have a GRAS or similar status. Any suitable lactic acid bacteria can be used. Suitable lactic acid bacterial may for example be selected from the genus lactobacillus, such as *Lactobacillus acidophilus, Lactobacillus farciminis, Lactobacillus delbrueckii, Lactobacillus casei, Lactobacillus plantarum, Lactobacillus rhamnosus, Lactobacillus brevis, Lactobacillus sanfransicencis, Lactobacillus pontis, Lactobacillus helveticus, Lactobacillus amylophilus, Lactobacillus amylolyticus* and *Lactobacillus fermentum*. From this list *Lb. Plantarum, Lb. Pontis, Lb. Brevis, Lb. Sanfranciscencis, Lb. helveticus, Lb. amylophilus, Lb. amylolyticus* are of particular interest for use in the dough acidification step of the method of the present invention. Food grade strains from the indicated genera and species are suitable for use in the invention. Suitable strains from alternative lactic acid bacteria from different genera can suitably be selected by the skilled person.

The skilled person will know that a revision of the taxonomical classification of the genus *Lactobacillus* has been proposed in 2020 by Zheng et al. (Zheng et al., Int. J. Syst. Evol. Microbiol. 2020;70:2782-2858) and that the above mentioned names are the basonyms of the revised species identifications presented below.

| Basonym | Identification after proposed revision |
| --- | --- |
| *Lactobacillus acidophilus* | *Lactobacillus acidophilus* |
| *Lactobacillus farciminis* | *Companilactobacillus farciminis* |
| *Lactobacillus delbrueckii* | *Lactobacillus delbrueckii* |
| *Lactobacillus casei* | *Lacticaseibacillus casei* |
| *Lactobacillus plantarum* | *lactiplantibacillus plantarum* |
| *Lactobacillus rhamnosus* | *Lacticaseibacillus rhamnosus* |
| *Lactobacillus brevis* | *Levilactobacillus brevis* |
| *Lactobacillus sanfranciscencis* | *Fructilactobacillus sanfranciscencis* |
| *Lactobacillus pontis* | *Limosilactobacillus pontis* |
| *Lactobacillus helveticus* | *Lactobacillus helveticus* |
| *Lactobacillus amylophilus* | *Amylolactobacillus amylophilus* |
| *Lactobacillus fermentum* | *Limosilactobacillus fermentum* |

The skilled person will consider these basonyms to be synonyms for the revised names, thus in the present application these basonyms should be considered synonymous with the revised names. Where a general reference is made to the genus *Lactobacillus* this is a reference to this genus (and the species included in it) as identified prior to the 2020 revision by Zheng et al.. Suitable species from alternative lactic acid bacteria from different genera can thus also be suitably selected from the newly introduced genera in which the mentioned species are classified. In particular from the genera *Lactobacillus, Companilactobacillus, Lacticaseibacillus, lactiplantibacillus, Lacticaseibacillus, Levilactobacillus, Fructilactobacillus, Limosilactobacillus, Amylolactobacillus, Limosilactobacillus* identified after the revision.

The dough acidification inoculum may suitably contain $1 \cdot 10^5$ - $1 \cdot 10^{10}$ CFU (Colony Forming Units), preferably $1 \cdot 10^6$ - $1 \cdot 10^9$ CFU, such as $1 \cdot 10^6$ - $1 \cdot 10^7$, CFU, $1 \cdot 10^7$ - $1 \cdot 10^8$ CFU, $1 \cdot 10^8$ - $1 \cdot 10^9$ CFU.

In the dough acidification step, the flour, water and the acid source are mixed, preferably by kneading, to form an acidified dough. Mixing may be achieved with standard practice and means, such as know bakery mixers and/or kneaders which can achieve homogeneous mixing/kneading of dough ingredients.

The goal of the dough acidification step is to bring the acidity of the flour environment to a target acidity endpoint.

When the acid source is a microbial inoculum, the mixture is allowed to ferment according to standard practice of sourdough preparation. The skilled person will be able to determine suitable fermentation conditions for reaching the target end point. Preferably, the dough acidification stage proceeds anaerobically, as anaerobic conditions are best for organic acid production by lactic acid bacteria. As is known to the skilled person, anaerobic conditions may be achieved and/or improved by using a vertical fermentation vessel. After fermentation to a desired endpoint, the fermented acidified dough is ready for further use in the method of the invention. According to certain preferred embodiments the fermented acidified dough is dried when the target parameter reaches the target endpoint. Drying preferably is to a dry matter content of 90-98%, more preferably 92-97%. When reference is made to fermented acidified dough, due account should be taken to the fact that the reference to this term includes the dried form of the fermented acidified dough. Drying may proceed with any suitable means known in the art, such as by reducing the water content, for example by drying with a drum drier, a spray drier a fluid drier or similar equipment. Drying fermented acidified dough, in particular to a dry matter content of 90-98%, will decrease the survival of the microorganisms in the fermented acidified dough and may be considered an inactivation step.

The selected endpoint for the acidification in the dough acidification stage may be based on the Total titratable acidity (TTA). Alternatively, the synonymous term Titratable Acidity (TA) may be used. TTA may be determined as is known to the skilled person. In particular, the skilled person will know that Total Titratable Acidity (TTA) refers to the total concentration of free ions and undissociated acids in a solution that can react with a strong base. A Total Titratable Acidity (TTA) titration will generally, use a solution of a strong base, NaOH, and either a chemical indicator or pH meter to signal when equivalent amounts of base have been metered into the sample. The concentration of NaOH used for TTA determination is in particular 0.1 N. A Titratable Acidity is calculated according following formula:

$$°TTA = \frac{V \times c \times 100}{m_{sample}}$$

where:

V  express volume of the NaOH solution consumed during titration [ml]
c  expresses the concentration of NaOH solution [mol.l$^{-1}$]
m  express weight of the sample [g]

The selected endpoint to reach may be a TTA of between 10°- 90°, such as 20°- 80°, 50°- 80°, 60°- 76°, 20°- 50°, 25°- 40°.

The process of the invention comprises an aerobic fermentation stage (stage (I)) for forming a dough, the aerobic yeast ferment. In this stage a microbial inoculum, the primary yeast inoculum, and at least one of flour and acidified dough, are provided together with water. The flour and water may be selected similar to as described above for the dough acidification stage.

The primary yeast inoculum contains a number of suitable yeast species. The yeast species selected for the primary yeast inoculum should be bakery yeast species suitable for use in bakery products. As such they should be food grade and/or have a GRAS (Generally Recognized As Safe) or a similar food grade status. Selection of yeast species suitable for use in bakery products, in particular sourdough, is within the ambit of the skilled person. Suitable yeast species may preferably be selected from the genus *Saccharomyces,* such as *Saccharomyces cerevisiae, Saccharomyces carlsbergensis,* from the genus *Kluyveromyces,* such as *Kluyveromyces marxianus lactis,* from the genus *Candida,* such as *Candida milleri, Candida humilis* or *Candida pseudohumilis.* Alternatively, suitable yeast species may be selected from the genus *Naumavozyma,* such as *Naumavozyma castelii,* or from the genus *Kazachstania,* such as *Kazachstania barnettii.* Most preferably the primary yeast inoculum comprises *Saccharomyces cerevisiae.*

The primary yeast inoculum used may suitably contain $1 \cdot 10^5$ - $1 \cdot 10^{10}$ CFU, preferably $1 \cdot 10^6$ - $1 \cdot 10^9$ CFU, such as $1 \cdot 10^6$ - $1 \cdot 10^7$, CFU, $1 \cdot 10^7$ - $1 \cdot 10^8$ CFU, $1 \cdot 10^8$ - $1 \cdot 10^9$ CFU.

In the aerobic fermentation stage at least one of flour and/or acidified dough, preferably fermented acidified dough, is mixed with the primary yeast inoculum and water. Mixing may be achieved with standard practice and means, such as know bakery mixers and/or kneaders, which can achieve homogeneous mixing/kneading of dough ingredients. When acidified dough is mixed with flour, water, yeast inoculum the mass proportion acidified dough in the end mass of the mixture may be between 5-35 % (w/w), preferably 5-25, more preferably 7-20, most preferably 9-15% (w/w). The mass proportion flour in the end mass of the mixture may be between 10-50%, preferably 15-40%, most preferably 20-25% (w/w). The mass proportion yeast inoculum in the end mass of the mixture may be between 0.5-3%, preferably 0.75-2%, most preferably 0.75-1.25% (w/w). The mass proportion water in the end mass of the mixture may be between 50-80%, preferably 60-75%, most preferably 65-70% (w/w).

After mixing, the mixture is allowed to ferment under aerobic conditions at about 18-33°C, such as about 22-28°C or about 24-26°C. It is preferred that the fermentation proceeds for about 15-30 hours, such as about 18-26 hours or about 20-24 hours. The aerobic fermentation results in a dough, the aerobic yeast ferment.

At least part of the aerobic yeast ferment is further processed in an anaerobic fermentation stage (stage II). In this anaerobic fermentation stage aerobic yeast ferment a microbial inoculum, the anaerobic stage inoculum, at least one of flour and/or acidified dough are provided. Water may optionally also be provided. The flour and water, when provided, may be selected in the same way as described above for the dough acidification stage. The anaerobic stage inoculum comprises a number of lactic acid bacteria species. Also, for the anaerobic stage inoculum, the lactic acid bacteria selected should be suitable for use in bakery products. As such they should be food grade and/or have a GRAS or similar status. The lactic acid bacteria may be selected from the same group as presented above for the dough acidification inoculum. When both a stage (0) and a stage (II) are used, the same or different species and/or strains of lactic acid bacteria may be used in the different stages.

The anaerobic stage inoculum used may suitably contain $1 \cdot 10^5$ - $1 \cdot 10^{10}$ CFU, preferably $1 \cdot 10^6$ - $1 \cdot 10^9$ CFU, such as $1 \cdot 10^6$ - $1 \cdot 10^7$, CFU, $1 \cdot 10^7$ - $1 \cdot 10^8$ CFU, $1 \cdot 10^8$ - $1 \cdot 10^9$ CFU.

Aerobic yeast ferment is mixed with at least one of flour and/or acidified dough and optionally water. For this aerobic yeast ferment is mixed with another part of (acidified) flour in the ratio of 1.7-2.2 to 0.8-1.3, preferably 1.9-2.1 to 0.9-1.1. The flour added to the aerobic yeast ferment may be plain flour or may be acidified flour or may be a mixture. Whether plain flour, acidified flour or a mixture is used, it is added to the aerobic ferment in the indicated ratio. Also, for this stage mixing may be achieved with standard practice and means, such as know bakery mixers and/or kneaders.

The mixture is allowed to ferment under anaerobic conditions at 28°-38°C, such as 30°-35°C or 32°-34°C. The anaerobic stage fermentation is allowed to proceed for 15-30 hours, such as 18-26, 20-24, 22-24 hours, to form a dough, the anaerobic ferment.

During the anaerobic fermentation stage, the target pH value may be 1.5-4.0, preferably 2.2-3.0. The target value for the Total Titratable Acidity after the anaerobic fermentation stage may be in the range of 8.0-22.0°TTA, preferably 10.0-18.0°TTA.

At least part of the anaerobic ferment is subsequently processed in a water activity reduction stage (stage III). In this water activity reduction stage at least one of flour and/or acidified dough, preferably fermented acidified dough, are provided. A microbial inoculum, the secondary yeast inoculum, comprising a number of yeast species is also provided. The yeast species selected for the secondary yeast inoculum should also be suitable for use in bakery products. As such they should also be food grade and/or have a GRAS status. The yeast species may be selected from the same group as presented above for the primary yeast inoculum. Most preferable the secondary yeast inoculum comprises *Saccharomyces cerevisiae.* For the primary and secondary yeast inoculum the same or different species and/or strains of yeast may be used.

The secondary yeast inoculum used may suitably contain $1 \cdot 10^5$ - $8 \cdot 10^6$ CFU, such as $1 \cdot 10^5$ - $1 \cdot 10^{10}$ CFU, preferably $1 \cdot 10^6$ - $1 \cdot 10^9$ CFU, such as $1 \cdot 10^6$ - $1 \cdot 10^7$, CFU, $1 \cdot 10^7$-$1 \cdot 10^8$ CFU, $1 \cdot 10^8$ - $1 \cdot 10^9$ CFU.

In the water activity reduction stage, anaerobic ferment from the previous stage, at least one of flour an acidified dough, preferably fermented acidified dough, a yeast inoculum, the secondary yeast inoculum, and optionally water are mixed, preferably by kneading. The proportion anaerobic ferment may be between 20-80%, preferably between 25-40% in the total mixed mass. When acidified dough is added, its proportion may be between 20-80%, preferably between 25-40% in the total mixed mass. When flour is added its proportion may be between 20% and 80%, preferably between 25-40% in the total mixed mass. The secondary yeast inoculum is added in a proportion of 0.5-1.5%, preferably 0.8-1.3% in the total mixed mass.

After mixing, the mixture is allowed to ferment under aerobic conditions at about 18-33°C, such as about 22-28°C or about 24-26°C. It is preferred that the fermentation proceeds for about 3-10 hours, such as about 4-8 hours or about 3-5 hours. The aerobic fermentation results in an active sourdough composition of an embodiment of the invention. At the end of the fermentation according to certain embodiments, the dry matter content preferably is between 60-87%, preferably 65-85%, most preferably 73-80%. According to alternative embodiments, at the end of the fermentation the water activity (Aw) is between 0.80-0.95 Aw, preferably 0.85-0.93 Aw, most preferably 0.90-0.91 Aw. This active sourdough composition may be ready for use in preparing a bakery product by subjecting it to forming and/or proofing and raising and backing the raised dough to a bakery product, such as a bread, including crusty breads, soft breads, loafs, thin breads, buns, flat breads etcetera. The active sour dough composition in any way known to the skilled person may also be used for preparing a predough (fermented dough) that is used for bread making in a later stage. Both in the direct use and in the formation of a predough of the active sourdough composition, further bakery ingredients, including flour, water, bread improvers, salt, yeast, flavourings etcetera, may be added.

When packaged in a closed container the active sourdough composition resulting from the water activity reduction stage has an ambient temperature shelf-life of up to at least 15 days, such as up to at least 30, 45, 60, 75, 90, 105 days or up to at least 120 days Within the description of the present invention, up to at least a followed by a specific number of days, for example 15 days should be considered to mean that the shelf-life extends up to the indicated number of days and may extend longer. A shelf life of 60 days is thus included within up to at least 90 days. It will be understood that these time periods can also be converted and expressed in months. For the conversion of days to months for the description and claims of the present invention a month is considered 30 days.

Generally, the term "shelf life" means the length of time for which an item or product, such as a sourdough composition, remains usable, fit for consumption, or saleable. The skilled person will understand that for the shelf life of a sourdough composition it is important that it retains its microbiological and/or organoleptic and/or textural characteristics within acceptable deviation of the specified values during storage. Ambient temperature shelf-life, within the context of the present invention, should be understood to mean a shelf-life at a moderate temperature, such that storage thus is easier (control of the storage temperature by active cooling or heating under moderate conditions in many cases is not required). Ambient temperature shelf-life refers to a shelf-life at a temperature within an interval of between 2°-25°C, preferably 5°-25°C, more preferably 10°-20°C or 12°-25°C, most preferably 15°-20°C. Further details about the packaging of the active sourdough composition of the invention in a closed container are provided below.

The active sourdough may preferably also be further processed in a mechanization stage, which renders it more suitable to be marketed as a storable active sourdough composition.

The optional mechanization stage may comprise mechanically homogenizing the active sourdough composition to a crumble form active sourdough. Methods and procedures for producing crumble form bakery products, that can also be applied to active sourdough compositions, are known to the skilled person. Such methods may for example include slow mixing (for example in the < 10 rpm range, in particular < 4 rpm) and/or micro-cutting (for example to particles with a size range < 5 mm, in particular < 2 mm).

The optional mechanization stage may in addition to or independently from the homogenization to a crumble form, comprise a step of compressing the active sourdough composition and/or crumble active sourdough into a number of solid form bodies, preferably cuttable bodies, most preferably cuttable blocks. Compression may proceed with known means and procedures, in particular using a press, suitable for compacting bakery products such as active sourdough compositions. WO2020/249917 refers to certain specific cuttable blocks of sourdough compositions.

The optional mechanization stage may in addition to or independently from the homogenization to a crumble form and/or compressing to solid form bodies, comprise a step of packaging the active sourdough composition.

When packaged, the active sourdough composition preferably is packaged in a closed food container. A closed food container should be understood to mean a container suitable for packaging spoilage sensitive foodstuffs, such as an active sourdough. Food containers, made from materials which do not allow exchange of solid and/or liquid particles, are suitable for use within the invention. A closed food container may or may not be a hermetically sealed container. A plastic bucket with a closing lid, preferably a tightly closing lid, such as a snap lid may be suitable for use as a closed container in packaging the active sourdough composition of the invention. Alternatively, a barrier film, such a metalized barrier film, may be used for packaging the active sour dough composition.

The closed container most preferably is a breathing container and thus a closed breathing container. A breathing container at atmospheric pressure allows a degree of exchange of gases, in particular oxygen and/or carbon dioxide between the interior space of the container and the exterior space surrounding the container. As the skilled person will know and understand, plastic buckets with a closing lid, including a tightly closing lid, such as a snap lid, may allow exchange of a degree of metabolic gasses at the connecting interface of the lid with the bucket body and thus may be suitable for use as a closed breathing container in packaging the active sourdough composition of the invention. According to certain preferred embodiments, the gas exchange rate of the breathing container is such that at atmospheric pressure a 10% pressure difference between the interior space of the container and the exterior is levelled in less than 48 hours, preferably in less than 36 hours, more preferably in less than 24 hours, most preferably in less than 12 hours, such as less than 6 hours. The gas pressures are levelled when they are the same in the interior space of the container and the exterior of the container. Reduction of gas pressure, preferably levelling of gas pressure, may also be achieved with the use of a unidirectional valve which allows gas outflow from the interior of the package, but not a gas inflow into the interior of the package.

According to certain embodiments, a breathing container is a selectively breathing container. A selectively breathing container at atmospheric pressure for certain metabolic gasses, such as for carbon dioxide, has a higher degree of exchange between the interior space of the container and the exterior space surrounding the container. It is known that certain materials, such as polyethylene, have a higher exchange rate for carbon dioxide, than for oxygen. Barrier films of polyethylene and/or other known selective gas exchange materials, such as selective gas exchange polymers are known to the skilled person.

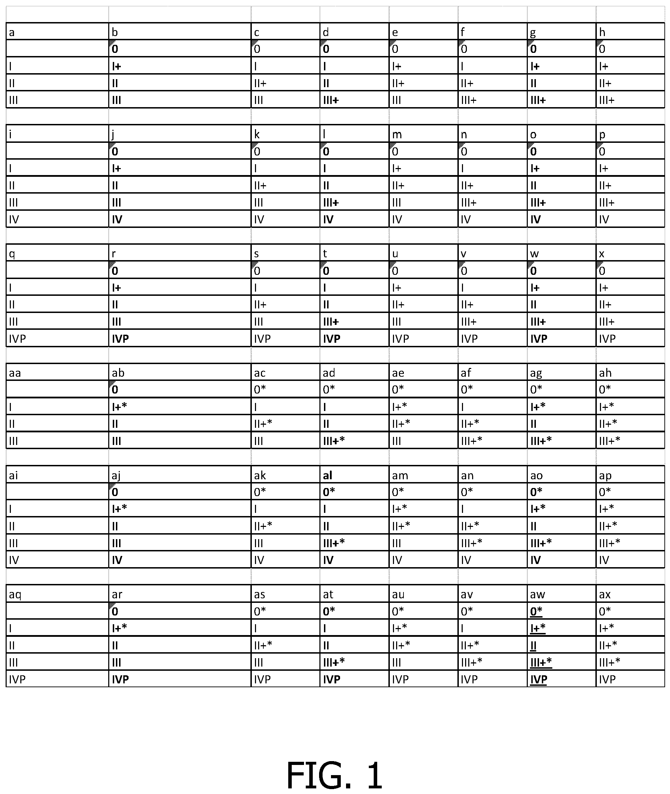

Particular embodiments of the process envisaged by the present invention are presented in the table of figure 1. In this table of figure 1 for the different embodiments "a-ax" it is indicated which stages (0), (I), (II), (III), (IV) are included. Bold indicated embodiments are preferred. When a dough acidification stage (0) is included, the "+" sign indicates in which of the stages the acidified dough is used. The "*" sign designates the use of a microbial inoculum as the acid source and thus that the dough acidification in stage (0) includes a lactic acid bacteria fermentation and that the acidified dough is a fermented acidified dough. The use of the letter "P" for stage IV indicates that a packaging step is incorporated. When a packaging step is incorporated it is preferably packaging of the sourdough composition in a closed breathing container. Embodiment "aw" thus incorporates stages (0), (I), (II), (III), (IV), wherein a microbial inoculum as the acid source in stage (0) and the acidified dough is incorporated in stages (I) and (III) and wherein further a packaging step is included in stage (IV). Preferably the packaging of the sourdough composition embodiment aw is in a closed breathing container. Embodiments for the stages (0), (I), (II), (III), (IV) are presented in bold are preferred. Embodiments for the stages (0), (I), (II), (III), (IV) are presented in bold and underlined font are more preferred.

A further aspect of the invention relates to an active sourdough composition obtainable with the process according to the invention. The active sourdough composition is characterized in that it has a shelf-life of up to at least 15 days, such as up to least 30, 45, 60, 75, 90, 105 or up to at least 120 days, when packaged in a closed container and stored at ambient temperature. Details of the active sourdough composition and the packaging have already been provided above. Prior art sourdough compositions do not have ambient temperature shelf lives that extend that long.

The active sourdough composition obtainable with the process of the invention comprises a living microbial culture, comprising in particular living yeast. It should thus be understood that the term active sourdough composition reflects that the composition comprises active living yeast. It is thus not microbially preserved by containing a level of microbial preservatives that would prevent growth of sourdough cultures, in particular yeast and lactic acid bacteria.

According to certain preferred embodiments, the dry matter content of the active sourdough composition is between 60-87%, more preferably 65-85%, most preferably 73-80%. According to alternative preferred embodiments, the water activity (Aw) of the active sourdough composition is between 0.80-0.95 Aw, more preferably 0.85-0.93 Aw, most preferably 0.90-0.91 Aw.

According to certain preferred embodiments the pH of the active sourdough composition of the invention is 2.5-6.0, such as 4.0-6.0, 4.5-5.5, 2.5-4.5, 3.0-4.0. According to certain preferred embodiments the TTA of the active sourdough composition of the invention is 5-45°TTA, such as 5-25° TTA, 10-20° TTA, 20-35° TTA, 30-45° TTA.

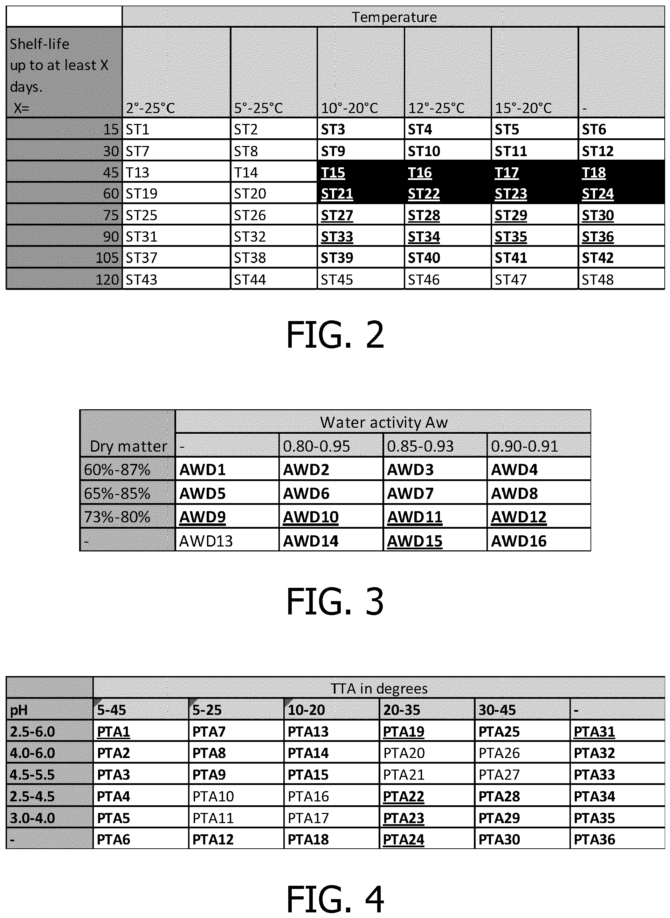

In the table of figure 2 combinations of parameter values for the shelf-life and the temperature range where the shelf-life is achieved are presented. Where a code ST1-ST48 is presented, the combination corresponding to the shelf-life value and the temperature range at which cross point the code is, is considered for the composition of the present invention. A minus sign for the temperature indicates that the temperature is not specified. For ST35 for example the shelf-life is up to at least 90 days at a temperature of 15°-25°C.

In the table of figure 3 combinations of parameter values for the dry matter content and the water activity (Aw) of the active sourdough composition of the invention are presented. A minus sign for the Aw indicates that the Aw is not specified. Similarly, minus sign for the dry matter content indicates that the dry matter content is not specified. For example, AWD1 relates to embodiments wherein the water activity is not specified and the dry matter content is 60-87%.

Similarly, in the table of figure 4, combinations of the TTA and pH of the active sourdough composition of the invention are presented. Again, a minus sign indicates that the pH respectively the TTA is not specified.

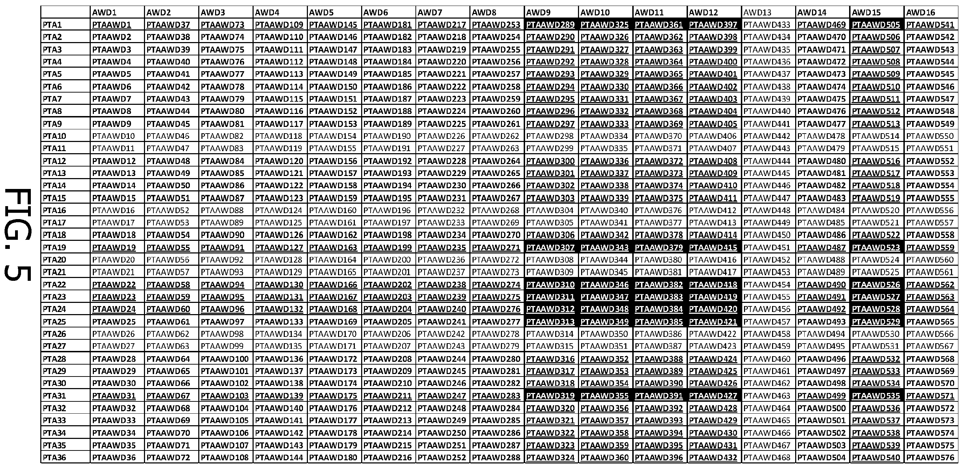

In the table of figure 5 combinations of the PTA (pH/TTA) combinations of figure 4 with the AWD (water activity/dry eight) combinations of figure 3 are presented. For example, PTAAWD59 relates to embodiments wherein the PTA23 combination is combined with the AWD2 combination.

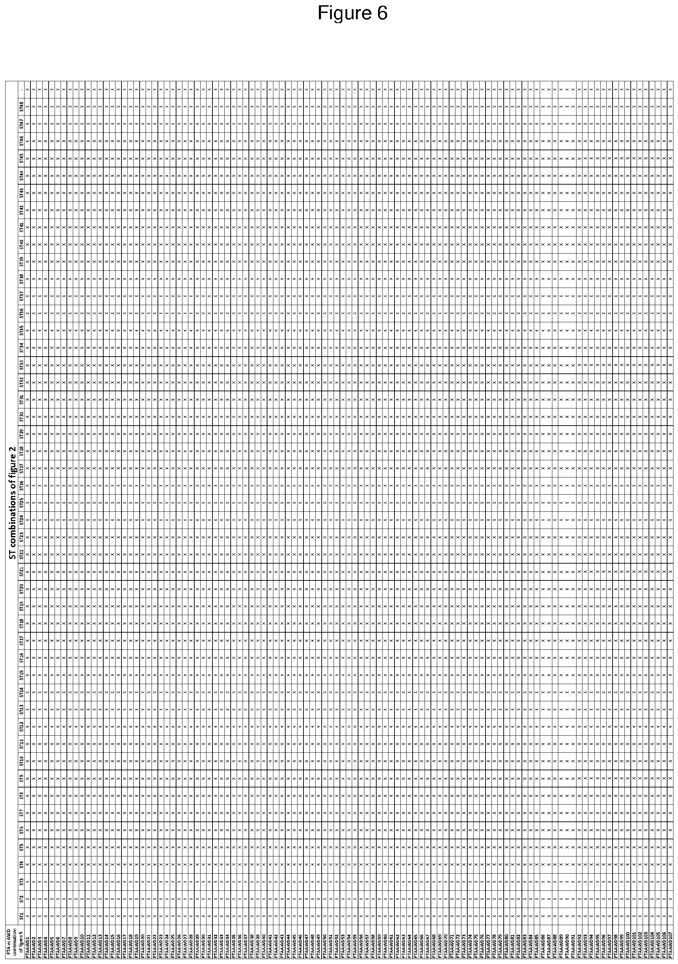

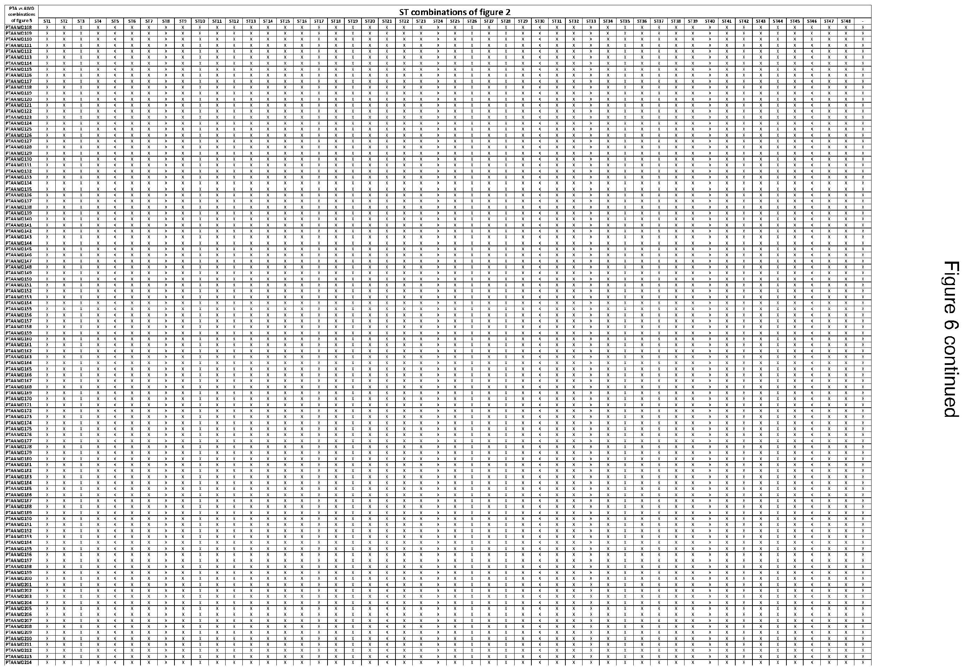

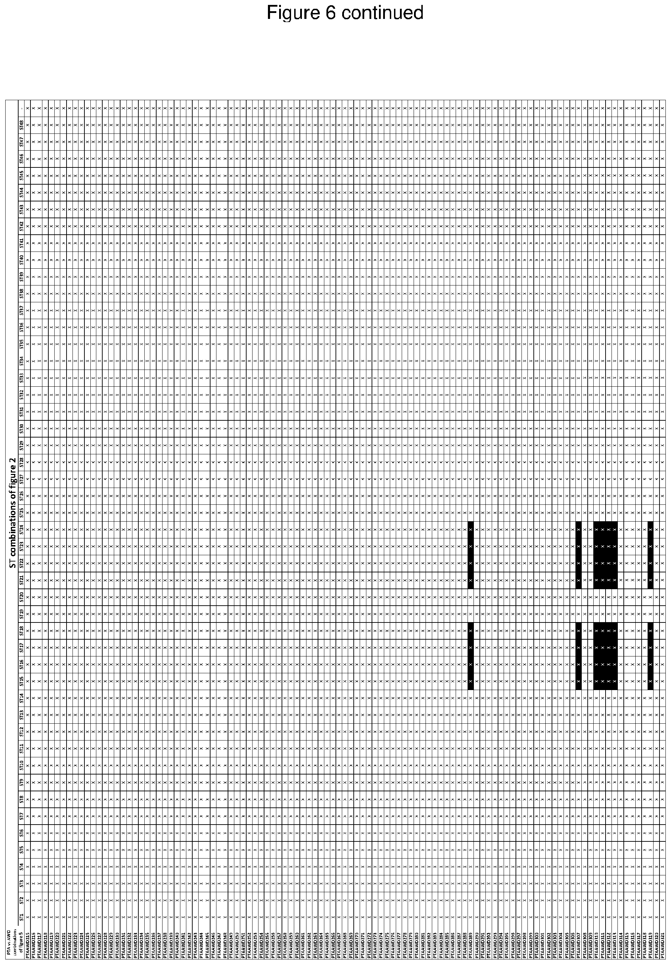

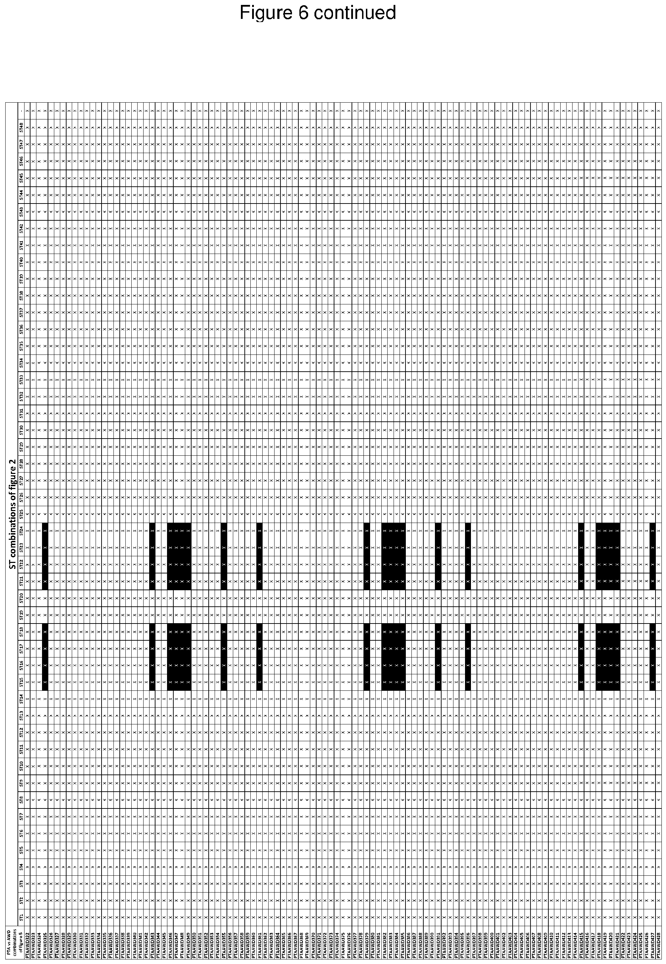

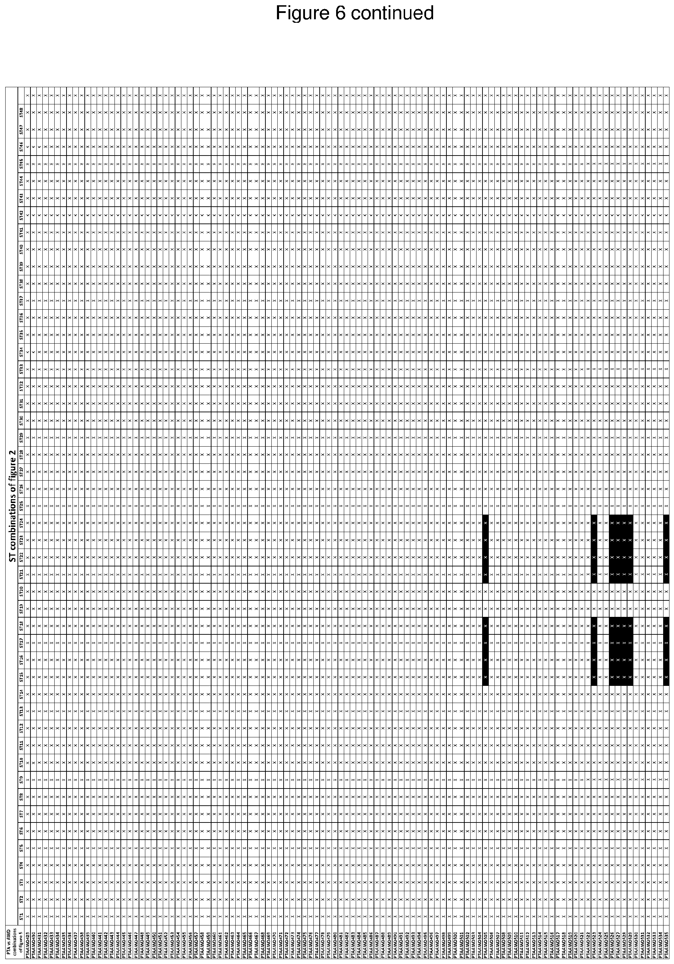

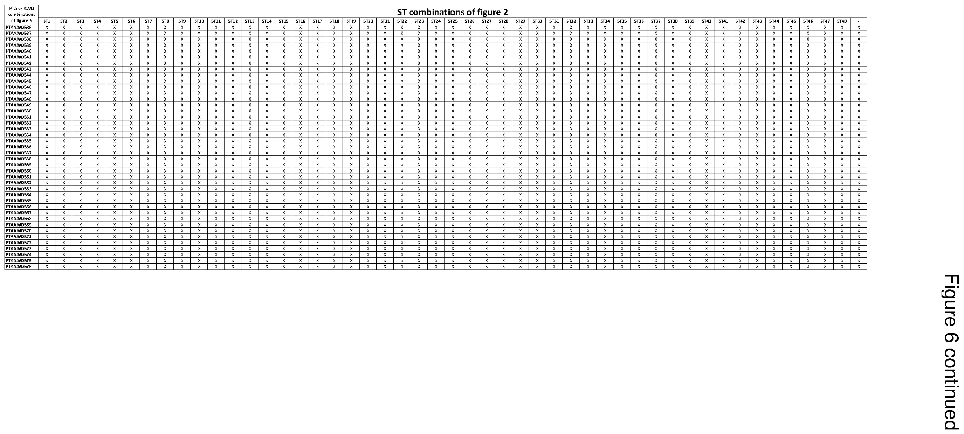

In the table of figure 6 combinations of the ST (shelf-life/Temperature) combinations of figure 2 with the PTAAWD combinations of figure 5 are presented. Where an "X" is presented the combination of ST and PTAAWD combinations is envisaged for the active sourdough composition of the invention for which the "X" is at the cross point.

In the tables of figures 1-6 embodiments presented in bold font are preferred. Embodiments presented in bold and underlined font are more preferred. Embodiments that are presented in light font against a dark background are most preferred. The invention in particular also envisages a sourdough composition of the invention, which is obtainable with the process of the invention, combining the embodiments that are presented in figures 1-6 with light font against a dark background wherein said sourdough composition comprises lactic acid bacteria, preferably from the genus *Lactobacillus,* in an amount of at least $1.0 \cdot 10^6$ CFU/g, preferably at least $5.0 \cdot 10^6$ CFU/g, more preferably at least $15.0 \cdot 10^6$ CFU/g, even more preferably between $1.0 \cdot 10^6$ and $1 \cdot 10^8$ CFU/g, most preferably between $1.0 \cdot 10^6$ and $1 \cdot 10^7$ CFU/g.

Yet a further aspect of the invention relates to a product comprising a closed container, said container comprising an amount of an active sourdough composition of the invention. As the active sourdough composition has utility in the bakery industry, the product is suitable for use in the bakery industry and thus can be considered a packaged bakery ingredient product. Further details about the packaging of the active sourdough composition of the invention in a closed container are provided above.

According to a preferred embodiment, the container is a breathing container. The technical features of a breathing container have already been discussed above.

According to a further preferred embodiment, the head space is between 1% and 50% of the volume of the container. The skilled person will understand that headspace is the volume of gas or empty space left above the contents in a closed container, in particular a sealed container. Between 1% and 50 % should be understood to include. 1-40%, 1%-35% and 5%-35% and preferably is, 5-20%, most preferably 8-12%. Preferably, the head space is filled with a modified atmosphere. A modified atmosphere is a gas mixture which in (relative) contents differs from the atmospheric gas mixture. It is known to use gas mixtures having differing amounts of $O_2$ and/or $CO_2$ and/or $N_2$ in the preservation of food products. For the preservation of the active sourdough of the invention a modified atmosphere composed of for example 20% $CO_2$ and 80% $N_2$ can be used according to certain embodiments of the invention.

It should be understood that all embodiments presented for the active sourdough composition obtainable by the process of the invention, including those presented in the tables of figures 1-6 are envisaged within the aspect of the invention relating to the product comprising a closed container, said container comprising an amount of the active sourdough composition. This is in particular also the case for the sourdough composition of the invention, which is obtainable with the process of the invention, combining the embodiments that are presented in figures 1-6 with light font against a dark background wherein said sourdough composition comprises lactic acid bacteria, preferably form the genus *Lactobacillus,* in an amount of at least $1.0 \cdot 10^6$ CFU/g, preferably at least $5.0 \cdot 10^6$ CFU/g, more preferably at least $15.0 \cdot 10^6$ CFU/g, most preferably between $1.0 \cdot 10^6$ and $1 \cdot 10^7$ CFU/g, even more preferably between $1.0 \cdot 10^6$ and $1 \cdot 10^8$ CFU/g, most preferably between $1.0 \cdot 10^7$ and $1 \cdot 10^8$ CFU/g.

A further aspect of the invention relates to a kit of parts comprising a product comprising a closed container, said container containing an amount of an active sourdough composition obtainable with the process of the invention, wherein the kit of parts further comprises an information carrier containing information about the storage of the product, wherein the information designates storage at moderate temperature as suitable. The features of the product comprising a closed container containing an amount of an active sourdough composition obtainable with the process of the invention have already been discussed above. The information carrier may be any information carrier that is suitable to present information regarding the storage of the products, in particular technical information regarding the storage of the product that designates storage at ambient temperature for an extended prior of time as suitable. Such information should be regarded as technical information as it renders the product suitable to be used for storage at ambient temperature during an extended period of time. A suitable information carrier may for example be a product label or a product leaflet. A container with an attached label and/or a leaflet for use of its contents are thus within this aspect of the invention. The time period over which storage is suitable, the temperature where storage is suitable and the combinations of parameter values (ST1-ST48) are as presented in the table of figure 2.

A further aspect of the invention relates to a method for preparing a bakery product. The method of this aspect of the invention comprises adding an amount of a sourdough composition obtainable with the process of the invention to dough ingredients comprising flour and water and preferably yeast, to form an inoculated dough and proofing and/or raising the inoculated dough, to form an inoculated dough that is ready to bake. It is directly evident to the skilled person how the sourdough composition of the invention can be employed in a method for preparing a bakery product. The flour and water used in the method of the invention may be selected as already described above for the process of the invention. Yeast preferably is also provided and when provided may be selected as presented above for the process of the invention. In the method of the invention the sourdough composition together with the flour and water and preferably yeast are mixed to an inoculated dough. Mixing to a dough preferably comprises kneading. The flour and water and optionally the yeast may be (partially) mixed and/or kneaded before being added to the sourdough composition. The sourdough composition preferably is provided by being released from a closed container of a product according to the invention comprising a closed container containing an amount of an active sourdough composition of the invention. This product may in particular form a part of the kit of parts according to the invention. In the method of the invention the proofed and/or raised dough may further be baked to a baked bakery product. The baked bakery product may for example be a bread, including crusty breads, soft breads, loafs, thin breads, buns, flat breads, baguettes etcetera.

In the method of the invention, the sourdough composition preferably is released from the closed container after storage of up to 15 days, preferably up to 30, 45, 60, 75, 90, 105 or up to 120 days at ambient temperature, such as a temperature within an interval of 2°-25°C, preferably 5°-25°C, more preferably 10°-20°C or 12°-25°C, most preferably 15°-20°C. The time period during which storage is envisaged, the temperature where storage is envisaged, and the combinations of parameter values (ST1-ST48) are as presented in the table of figure 2. In view of the fact that the sourdough composition of the invention is stable at ambient temperature the method of the invention can be performed more flexible.

The invention also relates to a use of a sourdough composition obtainable with the process of the invention for preparing a bakery product, in particular a bakery product selected from bread, such as crusty breads, soft breads, thin breads, flat breads, buns, baguettes. It is directly evident to the skilled person how the sourdough composition of the invention can be used for preparing a bakery product. Also, for this aspect of the invention, the sourdough composition preferably is provided by being released from the closed container of a product according to the invention, in particular a product as a part of a kit of parts according to the invention. For this aspect of the invention it is also further preferred if the sour dough composition is released from the closed container after storage of up to up to 15 days, preferably up to 30, 45, 60, 75, 90, 105 or up to 120 days at ambient temperature, such as a temperature within an interval of 2°-25°C, preferably 5°-25°C, more preferably 10°-20°C or 12°-25°C, most preferably 15°-20°C. Again, the time period during which storage is envisaged, the temperature where storage is envisaged, and the combinations of parameter values (ST1-ST48) are as presented in the table of figure 2.

**Examples**

Example 1: Preparation of sourdough compositions

For comparative purposes, sourdough compositions were prepared with different embodiments of the process of the invention and with alternative processes not according to the invention. In particular, the preparation processes differed in the application of the anaerobic lactic acid bacteria (pre)fermentation stage (0) and in the use of different yeast cultures in the aerobic yeast fermentation stage (I) and the water activity reduction stage (III). The prepared sourdough compositions (1-4) may be characterized based on the following:

1 = including acidified dough in stage (I) and (III.
2 = including acidified dough in stage (I), not in stage (III).
3 = no acidified dough in neither stage (I) nor (III).
4 = no acidified dough in stage (I), acidified dough in stage (III).

The products were prepared with the following procedure for stages (0), (I), (II), (III) and (IV).

**(0) The dough acidification stage**

1/Water and wholegrain wheat flour were mixed in a ratio of 1:1 to obtain yield of 200 (kg mixed product/kg flour). The wholegrain wheat flour used had an ash content (minerals) of 12.5% w/w (as per the supplier's specification).

2/The starter culture for the dough acidification stage was a composed inoculum, consisting of a combination of selected lactic acid bacteria of *Lb. Plantarum, Lb. Brevis, Lb. Sanfranciscencis.* For the experiments an inoculum containing $1 \cdot 10^6$ - $1 \cdot 10^7$ CFU/ml was used. Dosage of the starter culture was 2.5% (w/w) on the total of the flour and water mixture.

3/The dough acidification fermentation is proceeding mainly under anaerobic conditions without oxygenating the mass. A vertical fermentation vessel was used to minimize aeration and maximize anaerobic conditions for lactic acid bacteria. Agitation is not necessary but was performed, because it supports distributing the temperature gradients, organic acids, and available substrates homogenously in the mass. Optimal temperature for the dough acidification fermentation is in the range 28-38°C. For the experiments the temperature was set at 30°C. Time for the dough acidification fermentation may be between 15-30 hours. For the experiments the dough acidification fermentation continued for 20 hours.

4/The dough acidification stage is for lowering the acidity. It is desired that at the end of the dough acidification stage, the acidified dough has a total titratable acidity of 10-90° TTA, preferably 20-50° TTA, most preferably, 25-40°TTA. During the experiments the acidified dough was dried when the TTA reached 32° TTA +/- 7° TTA. Drying was accomplished on a double drum drier to a dry matter content of about 95%.

**(I) The aerobic fermentation stage**

1/Water and wholegrain wheat flour were mixed in a ratio of 1:1 to obtain yield of 200 (kg mixed product/kg flour). The wholegrain wheat flour used had an ash content (minerals) of 12.0 - 13.5%.

2/To the mixture of water and wholegrain wheat flour dried fermented acidified dough was added for compositions 1, 2. For compositions 3, 4 acidified dough was not added and instead (plain) wholegrain wheat four was used. Dosage of the dried fermented acidified dough (when used) may be 5-13%, preferably 7-10% on the total mixture of water and wholegrain wheat flour. In the experiments the dosage was 10%.

3/The mixture of the components is inoculated with the primary yeast starter inoculum. Preferably the inoculum is mainly composed by yeasts with species of Saccharomyces cerevisiae, *Saccharomyces carlsbergensis, Kluyveromyces marxianus lactis, Candida milleri.* In the experiments, the primary yeast inoculum contained $1 \cdot 10^6$ - $1 \cdot 10^7$ CFU of *Saccharomyces cerevisiae.* The starters were dosed at 1% (w/w) on the total water and flour mixture.

4/The first stage of fermentation is realized under aerobic conditions with oxygenating the mass with compressed air of standard atmospheric composition. Agitating is not necessary but was performed. Optimal temperature for the first fermentation is in the range 18-33°C (preferably 22-28°C). Time for the first stage fermentation is 15-30 hours (preferably 18-26 hours). In the experiments the fermentation was performed at 25°C for 24 hours. A horizontal fermentation vessel was used that minimizes the pressure on microbiota cell membranes and maximizes aeration.

**(II) The anaerobic fermentation stage**

1/ the fermented product from the aerobic fermentation stage was mixed with another part of wholegrain wheat flour in the ratio of 1:1. Water may be optionally provided, depending on the thickness of the substance. In the experiments no additional water was added.

2/The starter culture for the anaerobic fermentation stage consisted of a combination of *Lb. Plantarum, Lb. Brevis, Lb. Sanfranciscencis species.* Dosage of the starter culture ($1 \cdot 10^6$ - $1 \cdot 10^7$ CFU) was 2% (w/w) on the total mass.

3/The anaerobic fermentation stage was performed without oxygenating the mass. Agitating is not necessary but was performed because it supports distributing the temperature gradients, organic acids, and available substrates homogenously in the mixed mass. Temperature was 30°C. Time for the anaerobic stage of fermentation was 24 hours. A vertical fermentation vessel was used to minimize aeration and maximize anaerobic conditions for lactic acid bacteria.

4/During the anaerobic fermentation stage the pH value for the different compositions 1-4 dropped to 2.2-3.0. Total titratable acidity after the anaerobic fermentation stage of the different compositions was in the range of 10.0-18.0°TTA.

**(III) The water activity reduction stage**

1/The water activity reduction stage is performed in order to obtain low values of water activity level (aw) and high values of dry matter (solids, %), while preserving the active microorganisms in the sourdough, capable of multiplying.

2/To the anaerobic ferment mass, obtained in the anaerobic fermentation stage, for compositions 1, 4 wholegrain wheat flour is added at 100% on the anaerobic ferment mass, and wholegrain acidified fermented dough is added at 100% on the anaerobic ferment mass. Thus, for these compositions, the anaerobic ferment to wholegrain wheat flour to wholegrain acidified dough is 1:1:1 in the final mix. For compositions 2, 3 to the anaerobic ferment mass, obtained in the anaerobic fermentation stage, wholegrain wheat flour is added at 200% on the anaerobic ferment mass. Thus, for these compositions, the anaerobic ferment to wholegrain wheat flour is 1:2 in the final mix.

3/A starter culture ($1 \cdot 10^6$ - $1 \cdot 10^7$ CFU) is added at 1% on the total mixture. The starter was composed of *Saccharomyces cerevisiae.*

4/The water activity reduction stage is proceeding under aerobic conditions with oxygenating the mass. Agitating is optional but was performed in the experiments for optimal oxygen distribution. The temperature used for the fermentation of the water activity reduction stage in the experiments was 25°C. The time for the water activity reduction stage fermentation in the experiments was 4 hours.

The water activity of the sourdough at the end of the water activity reduction stage should be in the range of 0.800 - 0.900. The residual moisture content varied from 18 - 23% (dry matter 82-77%).

(IV) The mechanization stage

1/The final sourdough after the water activity reduction stage can be mechanically homogenized into a crumble form of various fineness. It can be left without homogenization, as well as it can be compressed to solid cuttable blocks. The crumble form allows for ease of handing and convenient dosing for bakers and supports ambient shelf-life of the final sourdough. In the experiments the sourdough was left without homogenization.

For long term storage for the further characterization of the sourdough compositions during the tests approximately 5 litres of compositions 1-4 was enclosed in closed Polypropylene buckets with an internal volume of 6.0 litres. The closing snap lid allowed for gas exchange between the interior and the exterior of the bucket. Buckets were stored at ambient temperature of about 20°C ± 2°C.

**Example 2: Characteristics of sourdough compositions**

The sourdough compositions 1-4 prepared as described in example 1 were characterized based on the following parameters.

pH

pH of the sourdough composition is measured after production with a pH meter calibrated on 3-point standard calibration. Temperature correction was done on 21°C. Because of the character of the product (semi-dry consistency) the pH is measured in an aqueous solution, prepared by weighing 10 grams of the product into a beaker and adding 100 grams of distilled water. After which the mixture is stirred on a magnetic stirrer to allow the potential lumps dissolve.

TTA

Titratable Acidity (TA) refers to the total concentration of free ions and undissociated acids in a solution that can react with a strong base and be neutralized. A Titratable Acidity (TA) titration will generally, use a solution of aa strong base, NaOH, and either a chemical indicator or pH meter to signal when equivalent amounts of base have been metered into the sample. The concentration of NaOH used for TTA determination in this example was 0.1 N. measurement of the pH was performed in analogy with what has been described above. A Titratable Acidity is calculated according following formula:

$$°TTA = \frac{V \times c \times 100}{m_{sample}}$$

where:

$V$    express volume of the NaOH solution consumed during titration [ml]

$c$    express concentration of NaOH solution [mol.l$^{-1}$]

$m$    express weight of the sample [g]

Aw

Water activity is the parameter which can help to estimate or predict the shelf-life. The value shows the amount of the water which is available to the microorganisms - it is free water which is not bounded with different substances and molecules. The lower the water activity is, the worse conditions for contaminants (moulds and yeasts) are. A water activity meter (AquaLAB TDL, METER Group, Inc. USA) was used for this measurement. The device is calibrated before and after each set of measuring. Small amount of the sample is weighted into the measuring cell, the cell is placed into the measuring chamber and after closing the lid the measurement starts. The values are without units.

Dry matter

An alternative parameter relating to the water content of the product is the dry matter. Dry matter influences the consistency of the final product and secondary also play the role in the microbiological stability. For the measurement of the dry matter a Moisture Analysing Balance was used (Kern MLS 50-3 HA 160N, Kern & Sohn GmbH). Approximately 5 grams of the product are weighted on the metal plate and allowed to dry in the equipment until the weight of the sample is stabilized. The difference in weight after removal of moisture from the sample is measured.

Shelf-life

The microbiological shelf-life of the product was evaluated in terms of microbial stability / contamination. The packaging and the product inside were examined visually and by evaluating odour in regular intervals (twice a week).
At the VÚM Dairy research institute (Výzkumný ústav mlékárenský s.r.o., Ke Dvoru 791/12a, 160 00 Praha 6, Czech Republic.) microbiological shelf-life was further confirmed for product 1 with plate count tests using proprietary selective media of the institute selective for lactic acid bacteria.
The results of the different analyses are presented in tables 1-5.

Table 1

| parameters of measured products: | pH | acidity [°TTA] |
|---|---|---|
| 1 = acidified dough in (I) and (III) | 3,6 | 27,46 |
| 2 = acidified dough in (I) | 5,36 | 11,09 |
| 3 = no acidified dough | 4,3 | 16,96 |
| 4 = acidified dough in (III) | 3,75 | 29,34 |

Table 2

| parameters of measured products: | Aw |
|---|---|
| 1 = acidified dough in (I) and (III) | 0,9007 |
| 2 = acidified dough in (I) | 0,9193 |
| 3 = no acidified dough | 0,9245 |
| 4 = acidified dough in (III) | 0,9084 |

Table 3

| parameters of measured products: | Dry matter |
|---|---|
| 1 = acidified dough in (I) and (III) | 76,58 |
| 2 = acidified dough in (I) | 73,43 |
| 3 = no acidified dough | 73,59 |
| 4 = acidified dough in (III) | 77,89 |

Table 4

| Sample | end of shelf-life test [1] |
|---|---|
| 1 = acidified in (I) and (III) | no mould after 90 days |
| 2 = acidified in (I) | no mould after 90 days |
| 3 = no acidified | no mould after 90 days |
| 4 = acidified in (III) | 46 |
| 1) number of days after production of sourdough composition till mould appearance. Test was ended after 90 days, when some samples still did not exhibit mould formation. ||

Table 5

| | # CFU's/g @ days from manufacture day | | |
|---|---|---|---|
| | 2 days | 30 days | 65 days |
| Lactobacilli[1] | $5.9 \cdot 10^6$ | $14.1 \cdot 10^6$ | $6.0 \cdot 10^6$ |
| 1) FGGM + PIM medium. FGGM = proprietary modified MRS agar medium for selective cultivation of lactic acid bacteria. PIM = pimaricine antimycotic. ||||

Example 3: Backing tests with sourdough compositions

Baguette type breads were baked 28 and 62 days after the production of compositions 1-4 with the following procedures.

Recipe

- 100% wheat flour (T530)
- 10% sourdough (compositions 1-4)
- 2% salt
- 0.1% conventional baker's yeast
- 65% water

(Percentages are on the flour weight)

Baking process

Mixing time: 3' (slow) +7' (fast) in spiral mixer
Bulk resting: 15'
Scaling into bread pieces 250g
Intermediate proofing: 30'
Shaping into baguettes
Proofing: 16 hours, 21°C, 80-85% relative humidity

Baking:

- 240°C, close damper, 8' with steam
- 240°C, open damper, 8' no steam

The baked breads were analysed based on the parameters indicated below, following the described procedures.
Bread appearance (shape, crust colour, oven spring) was evaluated by visual and tactile evaluation of the baked bread by experienced bakers.
Shape: The baguette was evaluated in terms of how round (arched) the shape was. The bread was baked on a flat tray (not on a shaped baguette tray) so the dough did not have any side support, and the resulting shape was purely due to the capability of the dough to raise and stabilize.

The desired shape: round on cut (on profile), elliptical
Undesired shape: flat, wide "U" shape opened at the bottom (like a hill)
Colour of the crust: Should be regular, no flakiness, not too strong Maillard reaction
Undesired attributes: too dark, flaky, irregular

Oven spring: Before the baking two incisions were made into the top surface of the dough by a baker's knife. Due to the oven spring the volume of the product increases quickly in the oven, and opens the incisions, thus revealing the part of the crumb inside. The level of the openness and "strength" of the oven spring was evaluated; it is a relative measurement, one baguette against other.

Volume of product

Volume of the product was determined by comparative volumeter measurements in a calibrated Volscan profiler volumeter (Stable Microsystems) in accordance with the manufacturer's instructions.

Colour of crumb

The colour of the crumb of the baked product. It is a relative assessment, one baguette against other. Desired colour: creamy white, tiny spots of milling products are allowed Undesired colour: greyish, uneven (spotty)

Stability/firmness of dough after proofing

After 16hrs of proofing (controlled proofing chamber, 21C/90% RH) the dough of pieces of the same size (260g) shaped into baguettes were submitted to the following tests:

- From the proofing plate the dough pieces were moved to a baking tray. Two diagonal cuts were performed at each dough piece/baguette.
- TEST #1; During 5 minutes the dough was visually checked for stability (the cuts as well as mechanical stress affect the gluten network/ retained gas). The dough pieces that remain intact were marked as +++, the dough pieces that showed signs of instability were marked as ++, the dough pieces that collapsed were marked +.
- TEST #2: the tray with the dough pieces/baguettes was dropped from 10cm flat on a table. The dough pieces that remain intact were marked as +++, the dough pieces that showed signs of instability were marked as ++, the dough pieces that collapsed were marked +.

For the final evaluation the average rankings were used.

Sensorics

Taste and flavour: should be pleasant, no off-taste, mild acidic taste, fresh, aromatic
Chewiness: should be easy to swallow, fleshy (certain resistance in chewing)
Moistness: should not be dry, good melting properties, fresh in mouth.

Power of leavening

The methodology was set internally. Consists of measurements of a rising level of the leavened dough placed in a graded beaker and fermented for a defined time.
In this particular case 200 grams of dough was placed in the beaker of 800 ml and let ferment in the same conditions like described in the process of bread preparation, for 16 hours. Then the reached rising level of the dough in mm was measured.

pH

To test acidifying properties of the sourdough compositions after storage, pH of the dough is measured after mixing (before fermentation) and after 16 hours of fermentation (during proofing at 21°C) by pH meter calibrated on 3-point standard calibration. Temperature correction was done on 21°C. Only inner part of the dough was measured.
The results are presented in tables 6-8. In the tables the comparative values are shown as + / ++ / +++ that correspond to a three-level scale, where "+" is the lowest mark, "++" is the middle mark and "+++" is the highest.

Table 6

| | Sample | Bread appearance [1] | Volume of product [2] | Colour of crumb |
|---|---|---|---|---|
| 28 days old samples | 1 = acidified dough in (I) and (III) | +++ | ++ | +++ |
| | 2 = acidified dough in (I) | +++ | +++ | +++ |
| | 3 = no acidified dough | ++ | + | ++ |
| | 4 = acidified dough in (III) | ++ | ++ | +++ |
| 62 days old samples | 1 = acidified dough in (I) and (III) | +++ | ++ | +++ |
| | 2 = acidified dough in (I) | +++ | +++ | +++ |
| | 3 = no acidified dough | ++ | + | ++ |
| | 4 = acidified dough in (III) | M | M | M |

1) Subjective visual and tactile evaluation of the baked bread: volume, shape, colour, oven spring,
2) comparative volumeter measurements
products that showed mould are marked as "M"

Table 7

| | Sample | Stability and firmness of dough after proofing | Crumb characteristics [3] | Subjective sensorics [4] |
|---|---|---|---|---|
| 28 days old samples | 1 = acidified dough in (I) and (III) | +++ | ++ | +++ |
| | 2 = acidified dough in (I) | +++ | ++ | ++ |
| | 3 = no acidified dough | ++ | ++ | ++ |
| | 4 = acidified dough in (III) | ++ | ++ | +++ |
| 62 days old samples | 1 = acidified dough in (I) and (III) | +++ | ++ | +++ |
| | 2 = acidified dough in (I) | +++ | +++ | ++ |
| | 3 = no acidified dough | + | + | ++ |
| | 4 = acidified dough in (III) | M | M | M |

3) aeration (porosity), softness, elasticity / resilience
4) taste, flavour, chewiness, moistness
products that showed mould are marked as "M"

Table 8

|  | Sample | Power of leavening 5) | pH dough after mixing | pH dough after 16 hrs of proofing |
|---|---|---|---|---|
| 28 days old samples | 1 = acidified dough in (I) and (III) | 95 | 5,10 | 4,92 |
|  | 2 = acidified dough in (I) | 97 | 5,34 | 5,28 |
|  | 3 = no acidified dough | 96 | 5,26 | 5,18 |
|  | 4 = acidified dough in (III) | 94 | 5,01 | 4,85 |
| 62 days old samples | 1 = acidified dough in (I) and (III) | 116 | 5,16 | 4,98 |
|  | 2 = acidified dough in (I) | 112 | 5,44 | 5,2 |
|  | 3 = no acidified dough | 100 | 5,3 | 5,16 |
|  | 4 = acidified dough in (III) | M | M | M |

5) measured dough rising capabilities in laboratory beaker, measured on graduated scale
products that showed mould are marked as "M"

Overall, the analyses of the different active sourdough compositions 1-4 and the backing tests performed with them show that with the method according to the invention an active sourdough composition of good quality is obtainable with an improved shelf life over existing active sourdough compositions, in particular at ambient temperatures. Existing active sourdough compositions are to be stored under cool conditions of about 2-8 °C (see e.g., WO2020/249917, paragraph [0024]). Incorporation of an acidified dough in the aerobic fermentation stage (stage I) improves the characteristics and performance of the active sourdough composition and the best results are obtained when the process incorporates acidified dough in both the aerobic fermentation stage (stage I) and in the water activity reduction stage (stage III). It may be expected that the effects obtained with the fermented acidified dough used in the experiments can also be obtained when the acidification of the acidified dough is achieved with alternative acid sources, such as an alternative lactic acid bacteria inoculum or with an organic acid capable of providing a number of C2, C3 or C4 organic acids, such as selected from acetic acid and/or lactic acid, and mixtures thereof.

**Example 4: Confirmatory experiments**

In order to confirm the expectation that the effects obtained can also be obtained with alternative microbial cultures, in particular other lactic acid bacteria, and other yeasts, confirmatory experiments were performed.

Preparation of sourdough compositions

These confirmatory experiments applied the procedures of experiment 1 for preparing sourdough compositions using alternative 1 (acidified dough in stage (I) and (III)). In addition, there were variations in the packaging materials used during storage tests. Stages (0), (I), (II), (III) and (IV) were executed as detailed in experiment 1, with the modifications presented below.
The variations of the microbial cultures used are presented in table 9.

Table 9.

|  | Lactic acid bacteria for stages (0) and (II) | Yeast culture for stages (I) and (III) |
|---|---|---|
| Variant 1.2 | *Lactobacillus paralimentaris (=Companilactobacillus paralimentaris), Lactobacillus zymae (=Levilactobacillus zymae), Lactobacillus sanfranciscensis (=Fructilactobacillus sanfranciscensis), Lactobacillus xiangfangensis (=Lactiplantibacillus xiangfangensis), Lactococcus.lactis IL1403* | *Candida pseudohumilis* and *Saccharomyces cerevisiae* |

(continued)

| | Lactic acid bacteria for stages (0) and (II) | Yeast culture for stages (I) and (III) |
|---|---|---|
| Variant 1.3 | *Lactobacillus paralimentaris (=Companilactobacillus paralimentaris),* | *Candida pseudohumilis* and *Naumavozyma castelii* |
| | *Lactobacillus zymae (=Levilactobacillus zymae), Lactobacillus sanfranciscensis (=Fructilactobacillus sanfranciscensis), Lactobacillus xiangfangensis (=Lactiplantibacillus xiangfangensis)* | |

In the mixed yeasts cultures the different yeast species were inoculated in approximately equal amounts. In the mixed lactic acid bacteria cultures the different lactic acid bacteria were added in approximately equal amounts. In the context of the whole of the experiments, the original variant 1 of the above experiments 1-3 may be considered as variant 1.1.

For long term storage for the further characterization of the sourdough compositions during the confirmatory tests approximately 5 litres (approx. 2,5kg) of compositions 1.2 and 1.3 was enclosed in closed airtight bags made of a double layer foil (PA 20 $\mu$m (outer foil)/PE 70 $\mu$m (inner foil)). The internal volume of these bags was 6 litres, and they were equipped with a unidirectional valve that allowed gas outflow out of the internal space, but not into the internal space of the bags. There was approximately 1 litre headspace above the product. The bags were stored at ambient temperature of about 20°C $\pm$ 2°C.

Characteristics of sourdough compositions

The sourdough compositions 1.2 and 1.3 prepared as described above were characterized based on the pH, TTA, water activity (Aw) dry matter content and shelf life as described in experiment 2.

The results of the different analyses are presented in tables 10-14.

Table 10

| parameters of measured products: | pH | acidity [°TTA] |
|---|---|---|
| Variant 1.2 | 3,85 | 28,49 |
| Variant 1.3 | 3,82 | 28,70 |

Table 11

| parameters of measured products: | Aw |
|---|---|
| Variant 1.2 | **0,8855** |
| Variant 1.3 | **0,8914** |

Table 12

| parameters of measured products: | Dry matter |
|---|---|
| Variant 1.2 | **76,583** |
| Variant 1.3 | **77,247** |

Table 13

| Sample | end of shelf-life test [1] |
|---|---|
| Variant 1.2 | no mould after 90 days[1] |

(continued)

| Sample | end of shelf-life test [1] |
|---|---|
| Variant 1.3 | no mould after 90 days[1] |

*1) number of days after production of sourdough composition till mould appearance. Test was ended after 90 days, when samples still did not exhibit mould formation.*

Table 14

| Lactobacilli[1] | # CFU's/g @ days from manufacture day | | | |
|---|---|---|---|---|
| | 2 days | 30 days | 60 days | 90 days |
| Var. 1.2 | $1.1 \cdot 10^7$ | $8.9 \cdot 10^6$ | $6.0 \cdot 10^6$ | $6.0 \cdot 10^6$ |
| Var. 1.3 | $4 \cdot 10^7$ | $5.7 \cdot 10^7$ | $5.5 \cdot 10^7$ | $6.0 \cdot 10^6$ |

*1) FGGM + PIM medium. FGGM = proprietary modified MRS agar medium for selective cultivation of lactic acid bacteria. PIM = pimaricine antimycotic.*

Backing tests with sourdough compositions

Baguette type breads were baked 20, 76 and 90 days after the production of compositions 1.2 and 1.3 with the procedures presented in Example 3. The baked breads were analysed based on the parameters indicated in Example 3, following the described procedures. The results are presented in tables 15-17. In tables 15-16 the comparative values are shown as + / ++ / +++ that correspond to a three-level scale, where "+" is the lowest mark, "++" is the middle mark and "+++" is the highest. Products showing mould would be marked "M". No products showed mould.

Table 15

| | Sample | Bread appearance [1] | Volume of product [2] | Colour of crumb |
|---|---|---|---|---|
| 20 days old samples | Variant 1.2 | +++ | ++ | ++ |
| | Variant 1.3 | +++ | ++ | +++ |
| 76 days old samples | Variant 1.2 | ++ | ++ | + |
| | Variant 1.3 | +++ | +++ | +++ |
| 90 days old samples | Variant 1.2 | +++ | +++ | ++ |
| | Variant 1.3 | +++ | ++ | +++ |

*1) Subjective visual and tactile evaluation of the baked bread: volume, shape, colour, oven spring,*
*2) comparative volumeter measurements*
*products that showed mould are marked as "M"*

Table 16

| | Sample | Stability and firmness of dough after proofing | Crumb characteristics [3] | Subjective sensorics [4] |
|---|---|---|---|---|
| 20 days old samples | Variant 1.2 | +++ | +++ | +++ |
| | Variant 1.3 | ++ | +++ | ++ |
| 76 days old samples | Variant 1.2 | ++ | ++ | ++ |
| | Variant 1.3 | ++ | +++ | +++ |
| 90 days old samples | Variant 1.2 | +++ | ++ | +++ |
| | Variant 1.3 | +++ | +++ | +++ |

3) aeration (porosity), softness, elasticity / resilience
4) taste, flavour, chewiness, moistness
products that showed mould are marked as "M"

Table 17

| | Sample | Power of leavening [5] | pH dough after mixing | pH dough after 16 hrs of proofing |
|---|---|---|---|---|
| 20 days old samples | Variant 1.2 | 107 | 5,47 | 5,23 |
| | Variant 1.3 | 113 | 5,37 | 5,23 |
| 76 days old samples | Variant 1.2 | 97 | 5,02 | 4,78 |
| | Variant 1.3 | 117 | 5,17 | 5,03 |
| 90 days old samples | Variant 1.2 | 123 | 5,35 | 5,19 |
| | Variant 1.3 | 127 | 5,07 | 4,89 |

5) measured dough rising capabilities in laboratory beaker, measured on graduated scale
products that showed mould are marked as "M"

Overall, the analyses of the different active sourdough compositions 1.2 and 1.3 and the backing tests performed with them confirm that with the method according to the invention an active sourdough composition of good quality is obtainable with an improved shelf life over existing active sourdough compositions, in particular at ambient temperatures.

**Claims**

1. Process for preparing an active sourdough composition comprising:

- (0) optionally a dough acidification stage, wherein acidified dough is prepared in a subprocess comprising:

- providing flour;
- providing water;
- providing an acid source, preferably an organic acid source, such as an organic acid composition or a microbial inoculum, the dough acidification inoculum, comprising a number of lactic acid bacteria species, preferably selected from the genus *Lactobacillus,* such as selected from *Lactobacillus acidophilus, Lactobacillus farciminis, Lactobacillus delbrueckii, Lactobacillus casei, Lactobacillus plantarum, Lactobacillus rhamnosus, Lactobacillus brevis, Lactobacillus sanfranciscencis, Lactobacillus pontis, Lactobacillus helveticus, Lactobacillus amylophilus, Lactobacillus amylolyticus* or *Lactobacillus fermentum*;
- mixing, preferably by kneading, the flour, water and the acid source, and when the acid source is a microbial inoculum fermenting the mixture, such as to form an acidified dough having a total titratable acidity (TTA) of between 10°- 90° TTA, preferably 20°-50° TTA, most preferably 25°-40° TTA;
- optionally drying the acidified dough to obtain a dried acidified dough preferably having a dry matter content of 90-98%, more preferably 92-97%;

- (I) an aerobic fermentation stage comprising:

    - providing at least one of flour and acidified dough, preferably fermented acidified dough, such as dried fermented acidified dough;
    - optionally providing water;
    - providing a microbial inoculum, the primary yeast inoculum, comprising a number of yeast species, preferably selected from the genus *Saccharomyces*, such as *Saccharomyces cerevisiae, Saccharomyces carlsbergensis,* from the genus *Kluyveromyces,* such as *Kluyveromyces marxianus lactis*, from the genus *Candida*, such as *Candida milleri,* or *Candida humilis*;
    - mixing at least one of flour and acidified dough, preferably fermented acidified dough, such as dried fermented acidified dough with the primary yeast inoculum and optionally water and allowing the mixture to ferment under aerobic conditions to form a dough, the aerobic yeast ferment;

- (II) an anaerobic fermentation stage comprising:

    - providing aerobic yeast ferment from the aerobic fermentation stage;
    - providing at least one of flour and acidified dough, preferably fermented acidified dough, such as dried fermented acidified dough;
    - optionally providing water;
    - providing a microbial inoculum, the anaerobic stage inoculum, comprising a number of lactic acid bacteria species, preferably comprising one or more selected from the genus *Lactobacillus,* such as selected from *Lactobacillus acidophilus, Lactobacillus farciminis, Lactobacillus delbrueckii, Lactobacillus casei, Lactobacillus plantarum, Lactobacillus rhamnosus, Lactobacillus brevis, Lactobacillus sanfransicencis, Lactobacillus pontis, Lactobacillus helveticus, Lactobacillus amylophilus, Lactobacillus amylolyticus* or *Lactobacillus fermentum*;
    - mixing aerobic yeast ferment with at least one of flour and acidified dough, preferably fermented acidified dough, such as dried fermented acidified dough and optionally water and allowing the mixture to ferment under anaerobic conditions to form a dough, the anaerobic ferment;

- (III) a water activity reduction stage comprising:

    - providing anaerobic ferment from the anaerobic fermentation stage;
    - providing at least one of flour and acidified dough, preferably fermented acidified dough, such as dried fermented acidified dough;
    - providing a microbial inoculum, the secondary yeast inoculum, comprising a number of yeast species, preferably selected from the genus *Saccharomyces*, such as *Saccharomyces cerevisiae, Saccharomyces carlsbergensis,* from the genus *Kluyveromyces,* such as *Kluyveromyces marxianus lactis*, from the genus *Candida,* such as *Candida milleri, or Candida humilis*;
    - mixing anaerobic ferment, secondary yeast inoculum and at least one of flour and acidified dough, preferably fermented acidified dough, such as dried fermented acidified dough, to a residual moisture content of 15-30%, preferably 18-25% and allowing the mixture to ferment under aerobic conditions to form an active sourdough composition;

- (IV) optionally a mechanization stage comprising one or more of:

- mechanically homogenizing the active sourdough composition to a crumble form active sourdough;
- compressing active sourdough composition and/or crumble active sourdough into a number of solid form bodies, preferably cuttable bodies, most preferably cuttable blocks;
- packaging the active sourdough starter composition.

2. Process according to claim 1, wherein the acid source is an organic acid source, preferably selected from a microbial inoculum, capable of providing a number of C2, C3 or C4 organic acids, preferably a number of C2 or C3 organic acids, such as selected from acetic acid and/or lactic acid, and mixtures thereof.

3. Process according to any of the claims 1-2, wherein in any of the stages (0), (I), (II), (III) or (IV) a number of further bakery ingredient is used, said further bakery ingredient preferably being selected from bread-making enzymes, such as amylases, glucose oxidases, xylanases, amyloglucosidases, lipases, phospholipases, proteases, transglutaminases, cellulases and mixtures thereof; salts such as acetates, fumarates, citrates, carbonates; flour oxidants such as ascorbic acid and ascorbate; fat, fruit and/or vegetable extracts.

4. Active sourdough composition obtainable with the process according to any of the claims 1-3 **characterized in that** it has a shelf-life of up to at least 15 days, such as up to at least 30, 45, 60, 75, 90, 105 days or up to at least 120 days, when packaged in a closed container and stored at a temperature in the range of 2°-25°C, preferably 5°-25°C, more preferably 10°-20°C or 12°-25°C, most preferably 15°-20°C, wherein preferably said active sourdough composition comprises lactic acid bacteria, preferably from the genus *Lactobacillus,* in an amount of at least $1.0 \cdot 10^6$ CFU/g, preferably at least $5.0 \cdot 10^6$ CFU/g, more preferably at least $15.0 \cdot 10^6$ CFU/g, even more preferred between $1.0 \cdot 10^6$ and $1 \cdot 10^8$ CFU/g, most preferably between $1.0 \cdot 10^6$ and $1 \cdot 10^7$ CFU/g, wherein preferably said lactic acid bacteria are present in said amount after storage during the duration of the shelf-life.

5. Active sourdough composition according to claim 4, wherein the composition has a Total Titratable Acidity (TTA) of 5-45°TTA, such as 5-25° TTA, 10-20° TTA, 20-35° TTA, 30-45° TTA.

6. Active sourdough composition according to any of the claims 4-5, wherein the composition has a water activity (Aw) of 0.70-0.95, preferably 0.75-0.90, more preferably 0.80- 0.90.

7. Active sourdough composition according to any of the claims 4-6, wherein the composition has a dry matter content of between 60-87%, preferably 65-85%, most preferably 73-80%.

8. Product comprising a closed container, said container containing an amount of an active sourdough composition of any of the claims 4-7.

9. Product according to claim 8, wherein the container allows gas exchange, preferably of water vapor and $CO_2$, between the interior and exterior of the container.

10. Product according to any of the claims 8-9, wherein there is a head space volume in the interior of the container and said head space volume is between 1% and 50% of the volume of the container, wherein the head space preferably is filled with a modified atmosphere.

11. Kit of parts comprising a product according to any of the claims 8-10 and an information carrier containing information about the storage of the product, wherein the information designates storage at a temperature in the range of 2°-25°C, preferably 5°-25°C, more preferably 10°-20°C or 12°-25°C, most preferably 15°-20°C, as suitable.

12. Method for preparing a bakery product comprising mixing, preferably by kneading, an amount of a sourdough composition according to claims 4-7, preferably released from a closed container of a product according to any of the claims 8-10, in particular as a part of a kit of parts according to claim 11, to dough ingredients comprising flour and water and preferably yeast to form an inoculated dough and proofing and/or raising the inoculated dough, to form a bakeable inoculated dough, wherein the method preferably further comprises baking the proofed and/or raised inoculated dough.

13. Method according to claim 12 wherein the sourdough composition is released from the closed container after storage of up to up to 15 days, preferably up to 30, 45, 60, 75, 90, 105 or up to 120 days at a temperature in the range of 2°-25°C, preferably 5°-25°C, more preferably 10°-20°C or 12°-25°C, most preferably 15°-20°C.

14. Use of a sourdough composition according to claims 4-7, preferably released from the closed container of a product according to any of the claims 8-10, in particular as a part of a kit of parts according to claim 11, for preparing a bakery product, in particular a bakery product selected from bread, such as crusty breads, soft breads, thin breads, flat breads, buns, baguettes.

15. Use according to claim 14, wherein the sour dough composition is released from the closed container after storage of up to 15 days, preferably up to 30, 45, 60, 75, 90, 105 or up to 120 days at a temperature in the range of 2°-25°C, preferably 5°-25°C, more preferably 10°-20°C or 12°-25°C, most preferably 15°-20°C and wherein preferably the sourdough composition after release comprises lactic acid bacteria, preferably from the genus *Lactobacillus,* in an amount of at least $1.0 \cdot 10^6$ CFU/g, preferably at least $5.0 \cdot 10^6$ CFU/g, more preferably at least $15.0 \cdot 10^6$ CFU/g, even more preferably between $1.0 \cdot 10^6$ and $1 \cdot 10^8$ CFU/g, most preferably between $1.0 \cdot 10^6$ and $1 \cdot 10^7$ CFU/g.

| a | b | c | d | e | f | g | h |
|---|---|---|---|---|---|---|---|
| | 0 | 0 | 0 | 0 | 0 | 0 | 0 |
| I | I+ | I | I | I+ | I | I+ | I+ |
| II | II | II+ | II | II+ | II+ | II | II+ |
| III | III | III | III+ | III | III+ | III+ | III+ |

| i | j | k | l | m | n | o | p |
|---|---|---|---|---|---|---|---|
| | 0 | 0 | 0 | 0 | 0 | 0 | 0 |
| I | I+ | I | I | I+ | I | I+ | I+ |
| II | II | II+ | II | II+ | II+ | II | II+ |
| III | III | III | III+ | III | III+ | III+ | III+ |
| IV | IV | IV | IV | IV | IV | IV | IV |

| q | r | s | t | u | v | w | x |
|---|---|---|---|---|---|---|---|
| | 0 | 0 | 0 | 0 | 0 | 0 | 0 |
| I | I+ | I | I | I+ | I | I+ | I+ |
| II | II | II+ | II | II+ | II+ | II | II+ |
| III | III | III | III+ | III | III+ | III+ | III+ |
| IVP | IVP | IVP | IVP | IVP | IVP | IVP | IVP |

| aa | ab | ac | ad | ae | af | ag | ah |
|---|---|---|---|---|---|---|---|
| | 0 | 0* | 0* | 0* | 0* | 0* | 0* |
| I | I+* | I | I | I+* | I | I+* | I+* |
| II | II | II+* | II | II+* | II+* | II | II+* |
| III | III | III | III+* | III | III+* | III+* | III+* |

| ai | aj | ak | al | am | an | ao | ap |
|---|---|---|---|---|---|---|---|
| | 0 | 0* | 0* | 0* | 0* | 0* | 0* |
| I | I+* | I | I | I+* | I | I+* | I+* |
| II | II | II+* | II | II+* | II+* | II | II+* |
| III | III | III | III+* | III | III+* | III+* | III+* |
| IV | IV | IV | IV | IV | IV | IV | IV |

| aq | ar | as | at | au | av | aw | ax |
|---|---|---|---|---|---|---|---|
| | 0 | 0* | 0* | 0* | 0* | 0* | 0* |
| I | I+* | I | I | I+* | I | I+* | I+* |
| II | II | II+* | II | II+* | II+* | II | II+* |
| III | III | III | III+* | III | III+* | III+* | III+* |
| IVP | IVP | IVP | IVP | IVP | IVP | IVP | IVP |

# FIG. 1

| Shelf-life up to at least X days. X= | Temperature | | | | | |
|---|---|---|---|---|---|---|
| | 2°-25°C | 5°-25°C | 10°-20°C | 12°-25°C | 15°-20°C | - |
| 15 | ST1 | ST2 | **ST3** | **ST4** | **ST5** | **ST6** |
| 30 | ST7 | ST8 | **ST9** | **ST10** | **ST11** | **ST12** |
| 45 | T13 | T14 | **T15** | **T16** | **T17** | **T18** |
| 60 | ST19 | ST20 | **ST21** | **ST22** | **ST23** | **ST24** |
| 75 | ST25 | ST26 | **ST27** | **ST28** | **ST29** | **ST30** |
| 90 | ST31 | ST32 | **ST33** | **ST34** | **ST35** | **ST36** |
| 105 | ST37 | ST38 | **ST39** | **ST40** | **ST41** | **ST42** |
| 120 | ST43 | ST44 | ST45 | ST46 | ST47 | ST48 |

# FIG. 2

| Dry matter | Water activity Aw | | | |
|---|---|---|---|---|
| | - | 0.80-0.95 | 0.85-0.93 | 0.90-0.91 |
| 60%-87% | **AWD1** | **AWD2** | **AWD3** | **AWD4** |
| 65%-85% | **AWD5** | **AWD6** | **AWD7** | **AWD8** |
| 73%-80% | **AWD9** | **AWD10** | **AWD11** | **AWD12** |
| - | AWD13 | **AWD14** | **AWD15** | **AWD16** |

# FIG. 3

| pH | TTA in degrees | | | | | |
|---|---|---|---|---|---|---|
| | 5-45 | 5-25 | 10-20 | 20-35 | 30-45 | - |
| 2.5-6.0 | **PTA1** | **PTA7** | **PTA13** | **PTA19** | **PTA25** | **PTA31** |
| 4.0-6.0 | **PTA2** | **PTA8** | **PTA14** | PTA20 | PTA26 | **PTA32** |
| 4.5-5.5 | **PTA3** | **PTA9** | **PTA15** | PTA21 | PTA27 | **PTA33** |
| 2.5-4.5 | **PTA4** | PTA10 | PTA16 | **PTA22** | **PTA28** | **PTA34** |
| 3.0-4.0 | **PTA5** | PTA11 | PTA17 | **PTA23** | **PTA29** | **PTA35** |
| - | **PTA6** | **PTA12** | **PTA18** | **PTA24** | **PTA30** | **PTA36** |

# FIG. 4

| | AWD1 | AWD2 | AWD3 | AWD4 | AWD5 | AWD6 | AWD7 | AWD8 | AWD9 | AWD10 | AWD11 | AWD12 | AWD13 | AWD14 | AWD15 | AWD16 |
|---|---|---|---|---|---|---|---|---|---|---|---|---|---|---|---|---|
| PTA1 | PTAAWD1 | PTAAWD37 | PTAAWD73 | PTAAWD109 | PTAAWD145 | PTAAWD181 | PTAAWD217 | PTAAWD253 | PTAAWD289 | PTAAWD325 | PTAAWD361 | PTAAWD397 | PTAAWD433 | PTAAWD469 | PTAAWD505 | PTAAWD541 |
| PTA2 | PTAAWD2 | PTAAWD38 | PTAAWD74 | PTAAWD110 | PTAAWD146 | PTAAWD182 | PTAAWD218 | PTAAWD254 | PTAAWD290 | PTAAWD326 | PTAAWD362 | PTAAWD398 | PTAAWD434 | PTAAWD470 | PTAAWD506 | PTAAWD542 |
| PTA3 | PTAAWD3 | PTAAWD39 | PTAAWD75 | PTAAWD111 | PTAAWD147 | PTAAWD183 | PTAAWD219 | PTAAWD255 | PTAAWD291 | PTAAWD327 | PTAAWD363 | PTAAWD399 | PTAAWD435 | PTAAWD471 | PTAAWD507 | PTAAWD543 |
| PTA4 | PTAAWD4 | PTAAWD40 | PTAAWD76 | PTAAWD112 | PTAAWD148 | PTAAWD184 | PTAAWD220 | PTAAWD256 | PTAAWD292 | PTAAWD328 | PTAAWD364 | PTAAWD400 | PTAAWD436 | PTAAWD472 | PTAAWD508 | PTAAWD544 |
| PTA5 | PTAAWD5 | PTAAWD41 | PTAAWD77 | PTAAWD113 | PTAAWD149 | PTAAWD185 | PTAAWD221 | PTAAWD257 | PTAAWD293 | PTAAWD329 | PTAAWD365 | PTAAWD401 | PTAAWD437 | PTAAWD473 | PTAAWD509 | PTAAWD545 |
| PTA6 | PTAAWD6 | PTAAWD42 | PTAAWD78 | PTAAWD114 | PTAAWD150 | PTAAWD186 | PTAAWD222 | PTAAWD258 | PTAAWD294 | PTAAWD330 | PTAAWD366 | PTAAWD402 | PTAAWD438 | PTAAWD474 | PTAAWD510 | PTAAWD546 |
| PTA7 | PTAAWD7 | PTAAWD43 | PTAAWD79 | PTAAWD115 | PTAAWD151 | PTAAWD187 | PTAAWD223 | PTAAWD259 | PTAAWD295 | PTAAWD331 | PTAAWD367 | PTAAWD403 | PTAAWD439 | PTAAWD475 | PTAAWD511 | PTAAWD547 |
| PTA8 | PTAAWD8 | PTAAWD44 | PTAAWD80 | PTAAWD116 | PTAAWD152 | PTAAWD188 | PTAAWD224 | PTAAWD260 | PTAAWD296 | PTAAWD332 | PTAAWD368 | PTAAWD404 | PTAAWD440 | PTAAWD476 | PTAAWD512 | PTAAWD548 |
| PTA9 | PTAAWD9 | PTAAWD45 | PTAAWD81 | PTAAWD117 | PTAAWD153 | PTAAWD189 | PTAAWD225 | PTAAWD261 | PTAAWD297 | PTAAWD333 | PTAAWD369 | PTAAWD405 | PTAAWD441 | PTAAWD477 | PTAAWD513 | PTAAWD549 |
| PTA10 | PTAAWD10 | PTAAWD46 | PTAAWD82 | PTAAWD118 | PTAAWD154 | PTAAWD190 | PTAAWD226 | PTAAWD262 | PTAAWD298 | PTAAWD334 | PTAAWD370 | PTAAWD406 | PTAAWD442 | PTAAWD478 | PTAAWD514 | PTAAWD550 |
| PTA11 | PTAAWD11 | PTAAWD47 | PTAAWD83 | PTAAWD119 | PTAAWD155 | PTAAWD191 | PTAAWD227 | PTAAWD263 | PTAAWD299 | PTAAWD335 | PTAAWD371 | PTAAWD407 | PTAAWD443 | PTAAWD479 | PTAAWD515 | PTAAWD551 |
| PTA12 | PTAAWD12 | PTAAWD48 | PTAAWD84 | PTAAWD120 | PTAAWD156 | PTAAWD192 | PTAAWD228 | PTAAWD264 | PTAAWD300 | PTAAWD336 | PTAAWD372 | PTAAWD408 | PTAAWD444 | PTAAWD480 | PTAAWD516 | PTAAWD552 |
| PTA13 | PTAAWD13 | PTAAWD49 | PTAAWD85 | PTAAWD121 | PTAAWD157 | PTAAWD193 | PTAAWD229 | PTAAWD265 | PTAAWD301 | PTAAWD337 | PTAAWD373 | PTAAWD409 | PTAAWD445 | PTAAWD481 | PTAAWD517 | PTAAWD553 |
| PTA14 | PTAAWD14 | PTAAWD50 | PTAAWD86 | PTAAWD122 | PTAAWD158 | PTAAWD194 | PTAAWD230 | PTAAWD266 | PTAAWD302 | PTAAWD338 | PTAAWD374 | PTAAWD410 | PTAAWD446 | PTAAWD482 | PTAAWD518 | PTAAWD554 |
| PTA15 | PTAAWD15 | PTAAWD51 | PTAAWD87 | PTAAWD123 | PTAAWD159 | PTAAWD195 | PTAAWD231 | PTAAWD267 | PTAAWD303 | PTAAWD339 | PTAAWD375 | PTAAWD411 | PTAAWD447 | PTAAWD483 | PTAAWD519 | PTAAWD555 |
| PTA16 | PTAAWD16 | PTAAWD52 | PTAAWD88 | PTAAWD124 | PTAAWD160 | PTAAWD196 | PTAAWD232 | PTAAWD268 | PTAAWD304 | PTAAWD340 | PTAAWD376 | PTAAWD412 | PTAAWD448 | PTAAWD484 | PTAAWD520 | PTAAWD556 |
| PTA17 | PTAAWD17 | PTAAWD53 | PTAAWD89 | PTAAWD125 | PTAAWD161 | PTAAWD197 | PTAAWD233 | PTAAWD269 | PTAAWD305 | PTAAWD341 | PTAAWD377 | PTAAWD413 | PTAAWD449 | PTAAWD485 | PTAAWD521 | PTAAWD557 |
| PTA18 | PTAAWD18 | PTAAWD54 | PTAAWD90 | PTAAWD126 | PTAAWD162 | PTAAWD198 | PTAAWD234 | PTAAWD270 | PTAAWD306 | PTAAWD342 | PTAAWD378 | PTAAWD414 | PTAAWD450 | PTAAWD486 | PTAAWD522 | PTAAWD558 |
| PTA19 | PTAAWD19 | PTAAWD55 | PTAAWD91 | PTAAWD127 | PTAAWD163 | PTAAWD199 | PTAAWD235 | PTAAWD271 | PTAAWD307 | PTAAWD343 | PTAAWD379 | PTAAWD415 | PTAAWD451 | PTAAWD487 | PTAAWD523 | PTAAWD559 |
| PTA20 | PTAAWD20 | PTAAWD56 | PTAAWD92 | PTAAWD128 | PTAAWD164 | PTAAWD200 | PTAAWD236 | PTAAWD272 | PTAAWD308 | PTAAWD344 | PTAAWD380 | PTAAWD416 | PTAAWD452 | PTAAWD488 | PTAAWD524 | PTAAWD560 |
| PTA21 | PTAAWD21 | PTAAWD57 | PTAAWD93 | PTAAWD129 | PTAAWD165 | PTAAWD201 | PTAAWD237 | PTAAWD273 | PTAAWD309 | PTAAWD345 | PTAAWD381 | PTAAWD417 | PTAAWD453 | PTAAWD489 | PTAAWD525 | PTAAWD561 |
| PTA22 | PTAAWD22 | PTAAWD58 | PTAAWD94 | PTAAWD130 | PTAAWD166 | PTAAWD202 | PTAAWD238 | PTAAWD274 | PTAAWD310 | PTAAWD346 | PTAAWD382 | PTAAWD418 | PTAAWD454 | PTAAWD490 | PTAAWD526 | PTAAWD562 |
| PTA23 | PTAAWD23 | PTAAWD59 | PTAAWD95 | PTAAWD131 | PTAAWD167 | PTAAWD203 | PTAAWD239 | PTAAWD275 | PTAAWD311 | PTAAWD347 | PTAAWD383 | PTAAWD419 | PTAAWD455 | PTAAWD491 | PTAAWD527 | PTAAWD563 |
| PTA24 | PTAAWD24 | PTAAWD60 | PTAAWD96 | PTAAWD132 | PTAAWD168 | PTAAWD204 | PTAAWD240 | PTAAWD276 | PTAAWD312 | PTAAWD348 | PTAAWD384 | PTAAWD420 | PTAAWD456 | PTAAWD492 | PTAAWD528 | PTAAWD564 |
| PTA25 | PTAAWD25 | PTAAWD61 | PTAAWD97 | PTAAWD133 | PTAAWD169 | PTAAWD205 | PTAAWD241 | PTAAWD277 | PTAAWD313 | PTAAWD349 | PTAAWD385 | PTAAWD421 | PTAAWD457 | PTAAWD493 | PTAAWD529 | PTAAWD565 |
| PTA26 | PTAAWD26 | PTAAWD62 | PTAAWD98 | PTAAWD134 | PTAAWD170 | PTAAWD206 | PTAAWD242 | PTAAWD278 | PTAAWD314 | PTAAWD350 | PTAAWD386 | PTAAWD422 | PTAAWD458 | PTAAWD494 | PTAAWD530 | PTAAWD566 |
| PTA27 | PTAAWD27 | PTAAWD63 | PTAAWD99 | PTAAWD135 | PTAAWD171 | PTAAWD207 | PTAAWD243 | PTAAWD279 | PTAAWD315 | PTAAWD351 | PTAAWD387 | PTAAWD423 | PTAAWD459 | PTAAWD495 | PTAAWD531 | PTAAWD567 |
| PTA28 | PTAAWD28 | PTAAWD64 | PTAAWD100 | PTAAWD136 | PTAAWD172 | PTAAWD208 | PTAAWD244 | PTAAWD280 | PTAAWD316 | PTAAWD352 | PTAAWD388 | PTAAWD424 | PTAAWD460 | PTAAWD496 | PTAAWD532 | PTAAWD568 |
| PTA29 | PTAAWD29 | PTAAWD65 | PTAAWD101 | PTAAWD137 | PTAAWD173 | PTAAWD209 | PTAAWD245 | PTAAWD281 | PTAAWD317 | PTAAWD353 | PTAAWD389 | PTAAWD425 | PTAAWD461 | PTAAWD497 | PTAAWD533 | PTAAWD569 |
| PTA30 | PTAAWD30 | PTAAWD66 | PTAAWD102 | PTAAWD138 | PTAAWD174 | PTAAWD210 | PTAAWD246 | PTAAWD282 | PTAAWD318 | PTAAWD354 | PTAAWD390 | PTAAWD426 | PTAAWD462 | PTAAWD498 | PTAAWD534 | PTAAWD570 |
| PTA31 | PTAAWD31 | PTAAWD67 | PTAAWD103 | PTAAWD139 | PTAAWD175 | PTAAWD211 | PTAAWD247 | PTAAWD283 | PTAAWD319 | PTAAWD355 | PTAAWD391 | PTAAWD427 | PTAAWD463 | PTAAWD499 | PTAAWD535 | PTAAWD571 |
| PTA32 | PTAAWD32 | PTAAWD68 | PTAAWD104 | PTAAWD140 | PTAAWD176 | PTAAWD212 | PTAAWD248 | PTAAWD284 | PTAAWD320 | PTAAWD356 | PTAAWD392 | PTAAWD428 | PTAAWD464 | PTAAWD500 | PTAAWD536 | PTAAWD572 |
| PTA33 | PTAAWD33 | PTAAWD69 | PTAAWD105 | PTAAWD141 | PTAAWD177 | PTAAWD213 | PTAAWD249 | PTAAWD285 | PTAAWD321 | PTAAWD357 | PTAAWD393 | PTAAWD429 | PTAAWD465 | PTAAWD501 | PTAAWD537 | PTAAWD573 |
| PTA34 | PTAAWD34 | PTAAWD70 | PTAAWD106 | PTAAWD142 | PTAAWD178 | PTAAWD214 | PTAAWD250 | PTAAWD286 | PTAAWD322 | PTAAWD358 | PTAAWD394 | PTAAWD430 | PTAAWD466 | PTAAWD502 | PTAAWD538 | PTAAWD574 |
| PTA35 | PTAAWD35 | PTAAWD71 | PTAAWD107 | PTAAWD143 | PTAAWD179 | PTAAWD215 | PTAAWD251 | PTAAWD287 | PTAAWD323 | PTAAWD359 | PTAAWD395 | PTAAWD431 | PTAAWD467 | PTAAWD503 | PTAAWD539 | PTAAWD575 |
| PTA36 | PTAAWD36 | PTAAWD72 | PTAAWD108 | PTAAWD144 | PTAAWD180 | PTAAWD216 | PTAAWD252 | PTAAWD288 | PTAAWD324 | PTAAWD360 | PTAAWD396 | PTAAWD432 | PTAAWD468 | PTAAWD504 | PTAAWD540 | PTAAWD576 |

FIG. 5

# Figure 6

# Figure 6 continued

# Figure 6 continued

# Figure 6 continued

# Figure 6 continued

## Figure 6 continued

ST combinations of figure 2

Europäisches
Patentamt

European
Patent Office

Office européen
des brevets

## EUROPEAN SEARCH REPORT

Application Number

EP 22 21 3192

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | FR 3 097 102 A1 (LESAFFRE & CIE [FR]) 18 December 2020 (2020-12-18) * paragraphs [0042], [0051]; tables 4,5,6,7 * | 1-15 | INV. A21D4/00 A21D8/04 A21D10/00 A21D10/04 |
| X | US 2007/243289 A1 (BONJEAN BERNARD [BE] ET AL) 18 October 2007 (2007-10-18) * paragraphs [0095] - [0098], [0107]; figure 1 * | 1-7 | A21D13/00 A23L7/104 A23L29/00 |
| X | SE 515 569 C2 (CLAS LOENNER AB [SE]) 27 August 2001 (2001-08-27) * example 1 and 2 – preparation of a sourdough product * * example 4 – storage test * * example 4 – storage test/ table * * example 5 – Baking whole wheat bread; example 6 – Baking white bread Ciabatta * | 1-7,12, 14 | |

TECHNICAL FIELDS
SEARCHED      (IPC)

A21D
A23L

The present search report has been drawn up for all claims

| Place of search | Date of completion of the search | Examiner |
|---|---|---|
| Munich | 31 March 2023 | Steiner Ribeiro G. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 21 3192

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | | Publication date | Patent family member(s) | | | Publication date |
|---|---|---|---|---|---|---|---|
| FR 3097102 | | A1 | 18-12-2020 | BR | 112021024964 | A2 | 15-02-2022 |
| | | | | CA | 3142981 | A1 | 17-12-2020 |
| | | | | CN | 114007426 | A | 01-02-2022 |
| | | | | EP | 3982737 | A1 | 20-04-2022 |
| | | | | FR | 3097102 | A1 | 18-12-2020 |
| | | | | JP | 2022537706 | A | 29-08-2022 |
| | | | | KR | 20220019811 | A | 17-02-2022 |
| | | | | US | 2022272992 | A1 | 01-09-2022 |
| | | | | WO | 2020249917 | A1 | 17-12-2020 |
| US 2007243289 | | A1 | 18-10-2007 | AT | 489851 | T | 15-12-2010 |
| | | | | BR | PI0417333 | A | 27-03-2007 |
| | | | | CA | 2545069 | A1 | 07-07-2005 |
| | | | | CN | 1886053 | A | 27-12-2006 |
| | | | | EA | 200601082 | A1 | 29-12-2006 |
| | | | | EP | 1547467 | A1 | 29-06-2005 |
| | | | | EP | 1711062 | A1 | 18-10-2006 |
| | | | | ES | 2357117 | T3 | 18-04-2011 |
| | | | | JP | 5481015 | B2 | 23-04-2014 |
| | | | | JP | 2007515173 | A | 14-06-2007 |
| | | | | MX | PA06007222 | A | 18-08-2006 |
| | | | | PL | 1711062 | T3 | 31-05-2011 |
| | | | | US | 2007243289 | A1 | 18-10-2007 |
| | | | | WO | 2005060757 | A1 | 07-07-2005 |
| SE 515569 | | C2 | 27-08-2001 | DE | 19983493 | T1 | 26-07-2001 |
| | | | | WO | 0010395 | A1 | 02-03-2000 |

EPO FORM P0459

For more details about this annex : see Official Journal of the European Patent Office, No. 12/82

**EP 4 193 837 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020249917 A

### Non-patent literature cited in the description

- **ZHENG et al.** *Int. J. Syst. Evol. Microbiol.,* 2020, vol. 70, 2782-2858